# EUROPEAN PATENT APPLICATION

(11) **EP 4 808 240 A1**
(43) Date of publication of application: **16.09.2026**
(21) Application number: 23958348.7
(22) Date of filing: 10.11.2023
(51) Int. Cl.: H04W 72/0453

(54) **TERMINAL, WIRELESS COMMUNICATION METHOD, AND BASE STATION**

(71) Applicant: NTT DOCOMO, INC., Tokyo 100-6150 (JP)
(72) Inventor: SHIBAIKE, Naoya, Tokyo 100-6150 (JP); NAGATA, Satoshi, Tokyo 100-6150 (JP); PI, Qiping, Beijing 100190 (CN); WANG, Jing, Beijing 100190 (CN); HOU, Xiaolin, Beijing 100190 (CN); LIU, Wenjia, Beijing 100190 (CN); CHEN, Lan, Beijing 100190 (CN)
(74) Representative: Hoffmann Eitle
(86) International application number: PCT/JP2023/040645
(87) International publication number: WO 2025/099949

(57) **Abstract**

A terminal according to one aspect of the present disclosure includes a control section that determines a first subcarrier spacing (SCS) of a plurality of first synchronization signal blocks, based on a specific condition, and a receiving section that receives one synchronization signal block among the plurality of first synchronization signal blocks. The SCS is higher than 960 kHz.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems, a new subcarrier spacing (SCS) is being studied.

However, design/operation of signals using such new SCS has not been fully studied. Unless studies on these is sufficient, degradation in communication quality and communication throughput reduction may occur.

Thus, an object of the present disclosure is to provide a terminal, a radio communication method, and a base station that appropriately receive a signal using a new subcarrier spacing. Solution to Problem

A terminal according to one aspect of the present disclosure includes a control section that determines a first subcarrier spacing (SCS) of a plurality of first synchronization signal blocks, based on a specific condition, and a receiving section that receives one synchronization signal block among the plurality of first synchronization signal blocks. The SCS is higher than 960kHz.

### Advantageous Effects of Invention

According to an aspect of the present disclosure, it is possible to appropriately receive a signal using a new subcarrier spacing.

### Brief Description of Drawings

[FIG. 1] FIGS. 1A to 1C show examples of a multiplexing pattern of SSB and CORESET #0.
[FIG. 2] FIG. 2 shows an example of resource configuration of CORESET #0.
[FIG. 3] FIG. 3 shows an example of a configuration of a CORESET #0 PDCCH monitoring occasion.
[FIG. 4] FIGS. 4A to 4C show examples of an SSB slot.
[FIG. 5] FIG. 5 shows an example of an SSB pattern of Example 1-1-1 of Embodiment 2-3.
[FIG. 6] FIG. 6 shows an example of an SSB pattern of Example 1-2-1 of Embodiment 2-3.
[FIG. 7] FIG. 7 shows an example of an SSB pattern of Example 1-2a-1 of Embodiment 2-3.
[FIG. 8] FIG. 8 shows an example of an SSB pattern of Example 2-1 of Embodiment 2-3.
[FIG. 9] FIG. 9 shows an example of an SSB pattern of Example 2-2 of Embodiment 2-3.
[FIG. 10] FIG. 10 shows an example of an SSB pattern of Example 3-1 of Embodiment 2-3.
[FIG. 11] FIG. 11 shows an example of an SSB pattern of Example 3-2 of Embodiment 2-3.
[FIG. 12] FIG. 12 shows an example of an SSB pattern of Choice 3 of Embodiment 2-3.
[FIG. 13] FIG. 13 is a diagram to show an example of a schematic structure of a radio communication system according to one embodiment.
[FIG. 14] FIG. 14 is a diagram to show an example of a structure of a base station according to one embodiment.
[FIG. 15] FIG. 15 is a diagram to show an example of a structure of a user terminal according to one embodiment.
[FIG. 16] FIG. 16 is a diagram to show an example of a hardware structure of the base station and the user terminal according to one embodiment.
[FIG. 17] FIG. 17 is a diagram to show an example of a vehicle according to one embodiment.

### Description of Embodiments

### (Initial Access Procedure)

In an initial access procedure, a UE (RRC_IDLE mode) receives an SS/PBCH block (SSB), transmits Msg. 1 (PRACH/random access preamble/preamble), receives Msg. 2 (PDCCH, PDSCH including random access response (RAR)), transmits Msg. 3 (PUSCH scheduled by RAR UL grant), and receives Msg. 4 (PDCCH, PDSCH including UE contention resolution identity). Thereafter, when the UE transmits an ACK to Msg. 4 by the base station (network), an RRC connection is established (RRC_CONNECTED mode).

The reception of the SSB includes PSS detection, SSS detection, PBCH-DMRS detection, and PBCH reception. The PSS detection performs detection of a part of a physical cell ID (PCI), detection (synchronization) of an OFDM symbol timing, and (coarse) frequency synchronization. The SSS detection includes detection of a physical cell ID. The PBCH-DMRS detection includes detection of (part of) an SSB index within a half radio frame (5ms). The PBCH reception includes detection of a system frame number (SFN) and radio frame timing (SSB index), reception of configuration information for remaining minimum system information (RMSI, SIB1) reception, and recognition of whether or not the UE can camp on the cell (carrier).

The SSB has a bandwidth of 20 RBs and a time of 4 symbols. The transmission periodicity of the SSB can be configured from {5, 10, 20, 40, 80, 160} ms. In the half frame, a plurality of symbol positions of the SSB are defined based on the frequency range (FR1, FR2).

The PBCH includes a payload of 56 bits. N repetitions of the PBCH are transmitted within a period of 80ms. N depends on the SSB transmission periodicity.

System information includes a MIB carried by the PBCH, the RMSI (SIB1), and the other system information (OSI). The SIB1 includes information for performing a RACH configuration and a RACH procedure. The relationship of time/frequency resources between the SSB and the PDCCH monitoring resource for SIB1 is configured by the PBCH.

The PDSCH carrying the SIB1 (SIB1 PDSCH) is transmitted periodically. The PDSCH is scheduled by a Type0-PDCCH. One SSB corresponds to one SIB1 PDSCH. One SIB1 PDSCH may be repeated twice or may not be repeated. The SIB1 configures a public land mobile network (PLMN) ID. The PLMN ID may be an MNO identifier.

The base station using beam correspondence transmits a plurality of SSBs by using a plurality of beams (analog beams) in each SSB transmission periodicity. The plurality of SSBs may be referred to as an SSB burst. The plurality of SSBs have a plurality of SSB indices, respectively. The UE that detects one SSB transmits a PRACH in a RACH occasion associated with the SSB index and receives an RAR in an RAR window.

### (SSB: Physical channels and modulation/Downlink/Physical signals/SS/PBCH block)

The resources in an SS/PBCH block (SSB) for the PSS, SSS, PBCH and DMRS for PBCH are defined as follows.
- PSS:
   -- OFDM symbol number l = 0 for the start of the SS/PBCH block, subcarrier number k = 56, 57, ..., 182 for the start of the SS/PBCH block
- SSS:
   -- OFDM symbol number l = 2 for the start of the SS/PBCH block, subcarrier number k = 56, 57, ..., 182 for the start of the SS/PBCH block
- Resources set to zero:
   -- OFDM symbol number l = 0 for the start of the SS/PBCH block, subcarrier number k = 0, 1, ..., 55, 183, 184, ..., 239 for the start of the SS/PBCH block
   -- OFDM symbol number l = 2 for the start of the SS/PBCH block, subcarrier number k = 48, 49, ..., 55, 183, 184, ..., 191 for the start of the SS/PBCH block
- PBCH:
   -- OFDM symbol number l = 1, 3 for the start of the SS/PBCH block, subcarrier number k = 0, 1, ..., 239 for the start of the SS/PBCH block
   -- OFDM symbol number l = 2 for the start of the SS/PBCH block, subcarrier number k = 0, 1, ..., 47, 192, 193, ..., 239 for the start of the SS/PBCH block
- DMRS for PBCH:
   -- OFDM symbol number l = 1, 3 for the start of the SS/PBCH block, subcarrier number k = 0 + v, 4 + v, 8 + v, ..., 236 + v for the start of the SS/PBCH block
   -- OFDM symbol number l = 2 for the start of the SS/PBCH block, subcarrier number k = 0 + v, 4 + v, 8 + v, ..., 44 + v, 192 + v, 196 + v, ..., 236 + v for the start of the SS/PBCH block

### (SSB Pattern: Physical layer procedures for control/Synchronization procedures/Cell search)

In a half-frame with a plurality of SS/PBCH blocks of the existing specification, the first symbol index for a plurality of candidate SS/PBCH blocks is determined according to the SCS of the plurality of SS/PBCH blocks as follows. Here, index 0 is the first symbol of the first slot in the half-frame.

- Case A - 15 kHz SCS: The first symbol of the plurality of candidate SS/PBCH blocks has an index of {2, 8} + 14 · n.
   -- In operation without shared spectrum channel access
   --- For carrier frequency (FR1) of 3 GHz or lower, n = 0, 1.
   --- For carrier frequencies in the FR1 greater than 3 GHz, n = 0, 1, 2, 3.
   -- In operation with shared spectrum channel access, n = 0, 1, 2, 3, 4.
- Case B - 30 kHz SCS: The first symbol of the plurality of candidate SS/PBCH blocks has an index of {4, 8, 16, 20} + 28 · n. For carrier frequency (FR1) of 3 GHz or lower, n = 0, and for carrier frequency in FR1 above 3 GHz, n = 0, 1.
- Case C - 30 kHz SCS: The first symbol of the plurality of candidate SS/PBCH blocks has an index of {2, 8} + 14 · n.
   -- In operation without shared spectrum channel access
   --- In paired spectrum operation (FDD), n = 0, 1 for carrier frequency (FR1) of3 GHz or lower, and n = 0, 1, 2, 3 for carrier frequency in FR1 above 3 GHz. In operation with shared spectrum channel access, n = 0, 1, 2, 3, 4.
   --- In unpaired spectrum operation (TDD), n = 0, 1 for carrier frequency (FR1) less than 1.88 GHz, and n = 0, 1, 2, 3 for carrier frequency in FR1 equal to or above 1.88 GHz.
   -- In operation with shared spectrum channel access, n = 0, 1, 2, 3, 4, 5, 6, 7, 8, 9.
- Case D - 120 kHz SCS: The first symbol of the plurality of candidate SS/PBCH blocks has an index of {4, 8, 16, 20} + 28 · n. For the carrier frequency in FR2, n = 0, 1, 2, 3, 5, 6, 7, 8, 10, 11, 12, 13, 15, 16, 17, 18.
- Case E - 240 kHz SCS: The first symbol of the plurality of candidate SS/PBCH blocks has an index of {8, 12, 16, 20, 32, 36, 40, 44} + 56 · n. For the carrier frequency in FR2-1, n = 0, 1, 2, 3, 5, 6, 7, 8.
- Case F - 480 kHz SCS: The first symbol of the plurality of candidate SS/PBCH blocks has an index of {2, 9} + 14 · n. For the carrier frequency in FR2-2, n = 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31.
- Case G - 960 kHz SCS: The first symbol of the plurality of candidate SS/PBCH blocks has an index of {2, 9} + 14 · n. For the carrier frequency in FR2-2, n = 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31.

In the plurality of cases above, when the SCS of the SS/PBCH block is not provided by ssbSubcarrierSpacing, applicable cases for a given cell depend on the corresponding frequency band.

### (Multiplexing Pattern of SSB and CORESET #0)

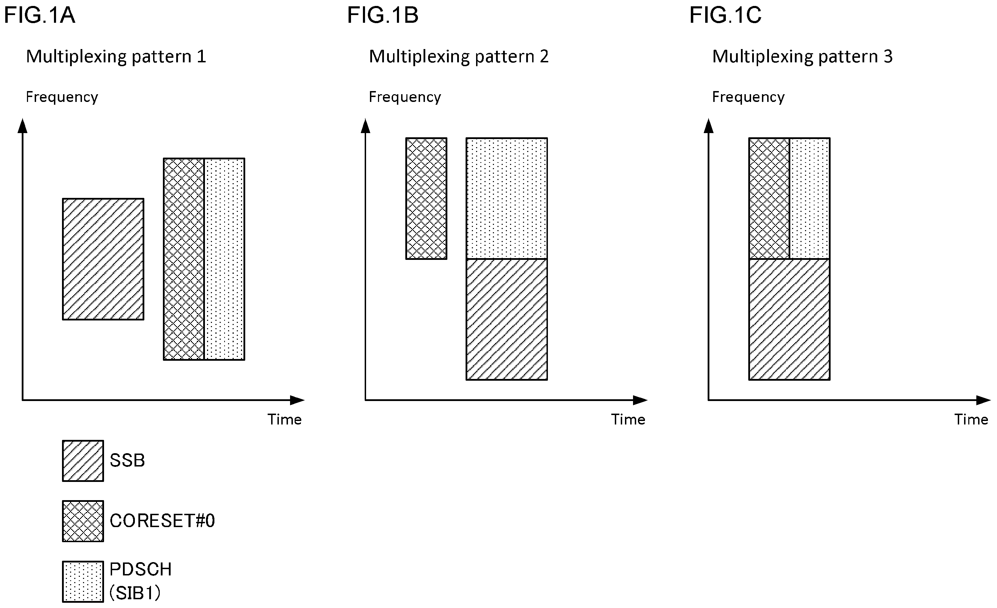

In an existing specification, the multiplexing pattern of SSB and CORESET #0 for FR and {SSB SCS, CORESET #0 SCS} is defined as follows.
- FR1: Multiplexing pattern 1 (FIG. 1A) is applied to {15, 15} kHz, {30, 30} kHz, {15, 30} kHz, and {30, 15} kHz.
- FR2-1:
   -- Multiplexing pattern 1 and multiplexing pattern 2 (FIG. 1B) are applied to {120, 60} kHz and {240, 120} kHz.
   -- For {120, 120} kHz, multiplexing pattern 1 and multiplexing pattern 3 (FIG. 1C) are applied.
   -- For {240, 60} kHz, multiplexing pattern 1 is applied.
- FR2 2:
   -- Multiplexing pattern 1 and multiplexing pattern 3 are applied to {120, 120} kHz, {480, 480} kHz, and {960, 960} kHz.

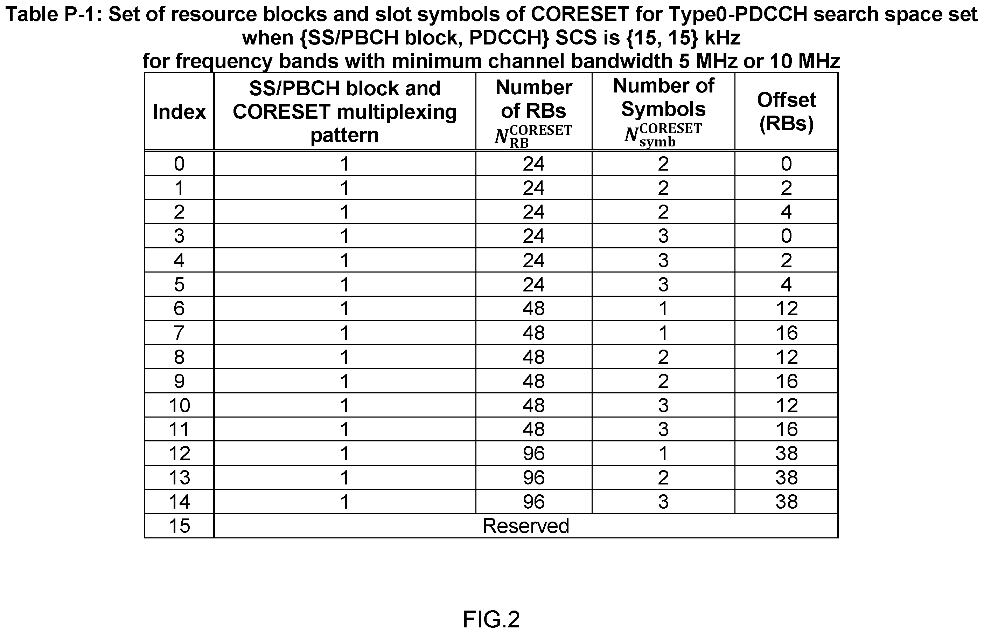

A set of a plurality of resource blocks and a plurality of symbols of a CORESET for a Type0-PDCCH CSS set is defined for a frequency band for minimum channel bandwidth, an SCS of SS/PBCH block, and an SCS of PDCCH. FIG. 2 shows a table P-1 indicating a set of a plurality of resource blocks and a plurality of symbols of a CORESET for Type0-PDCCH CSS set when {SS/PBCH block SCS, PDCCH SCS} is {15, 15} kHz in a frequency band with minimum channel bandwidth 5MHz or 10MHz. The index of this table is provided by the MIB (controlResourceSetZero in pdcch-ConfigSIB1). For a value of the index, the multiplexing pattern of the SS/PBCH block and the CORESET, the number of RBs of the CORESET, the number of symbols of the CORESET, and an RB offset of the CORESET are defined.

### (Monitoring of CORESET #0 PDCCH: Physical layer procedures for control/UE procedure for monitoring Type0-PDCCH CSS sets)

In an existing specification, a parameter for monitoring the CORESET #0 PDCCH is determined according to a table.

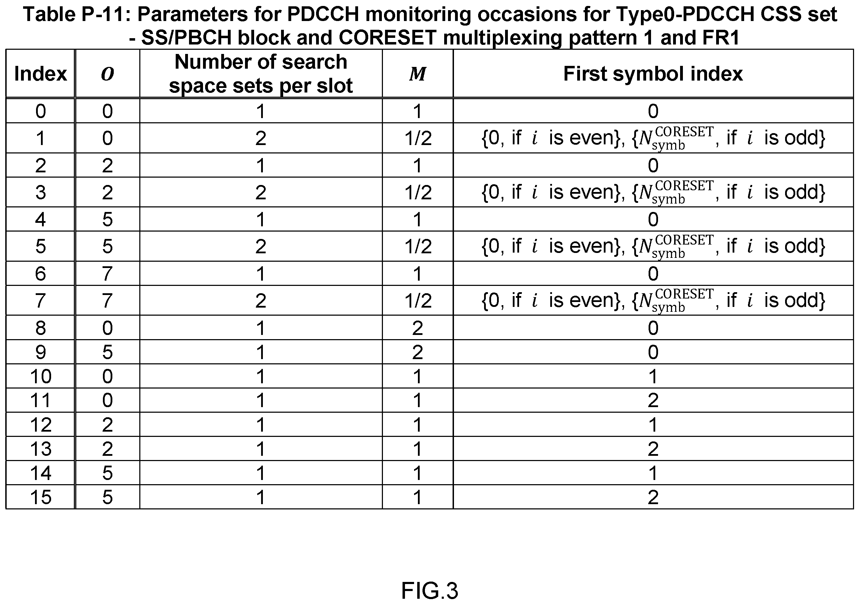

For FR and multiplexing pattern, parameters of PDCCH monitoring occasion for Type0-PDCCH CSS set are defined. FIG. 3 shows a table P-11 indicating parameters of PDCCH monitoring occasion for a Type0-PDCCH CSS set for FR1 and multiplexing pattern 1. The index of this table is provided by the MIB (searchSpaceZero in pdcch-ConfigSIB1). For a value of the index, O, the number of search space sets per slot, M, and the first symbol index of the PDCCH monitoring occasion are defined.

In operation (licensed band) without shared spectrum channel access (listen before talk (LBT)) and in multiplexing pattern 1 of SS/PBCH block and CORESET, the UE monitors the PDCCH in the Type0-PDCCH CSS set over two slots. For an SS/PBCH block with index i, the UE determines the index of the slot n₀ as n₀ = (O · 2^{µ} + ceil (i · M)) mod Nₛₗₒₜ^{frame, µ}. The slot n₀ is in a frame in frames having a system frame number SFN_{c} that satisfies SFN_{c} mod 2 = 0 if ceil (O · 2^{µ} + ceil (i · M))/Nₛₗₒₜ^{frame, µ}) mod 2 = 0, or in a frame in frames having a system frame number SFN_{c} that satisfies SFN_{c} mod 2 = 1 if ceil (O · 2^{µ} + ceil (i · M))/Nₛₗₒₜ^{frame, µ}) mod 2 = 1. Here, µ ∈ {0, 1, 2, 3, 5, 6} based on the SCS for PDCCH reception in the CORESET. The two slots follow the following:
- For µ ∈ {0, 1, 2, 3} and the SS/PBCH block with index i, the two slots including the associated Type0-PDCCH monitoring occasions are slots n₀ and n₀ + 1, and M, O and the index of the first symbol of the CORESET in slots n₀ and n₀ + 1 are given by the corresponding tables in a specification.
- For µ = 5 and the SS/PBCH block with index i, the two slots including the associated Type0-PDCCH monitoring occasion are slots n₀ and n₀ + 4, and M, O and the index of the first symbol of the CORESET in slots n₀ and n₀ + 4 are given by the corresponding tables in the specification. Here, X = 1.25.
- For µ = 6 and the SS/PBCH block with index i, the two slots including the associated Type0-PDCCH monitoring occasion are slots n₀ and n₀ + 8, and M, O and the index of the first symbol of the CORESET in slots n₀ and n₀ + 8 are given by the corresponding tables in the specification. Here, X = 0.625.

In operation with shared spectrum channel access (unlicensed band) and multiplexing pattern 1 of SS/PBCH block and CORESET, the UE monitors the PDCCH in the Type0-PDCCH CSS set over a plurality of slots. The plurality of slots include a Type0-PDCCH monitoring occasion associated with the SS/PBCH block that is QCLed with the SS/PBCH block providing a CORESET for a Type0-PDCCH CSS set, in terms of average gain, 'typeA' and 'typeD' characteristics of quasi co-location (QCL), if such characteristics are available. 0 ≤ i⁻ ≤ Lₘₐₓ⁻ - 1, and for a candidate SS/PBCH block index i⁻, two slots include a Type0-PDCCH monitoring occasion associated therewith. The UE determines the index of slot n₀ as n₀ = (O · 2^{µ} + ceil (i⁻ · M)) mod Nₛₗₒₜ^{frame, µ}. The slot n₀ is in a frame in frames having a system frame number SFN_{c} that satisfies SFN_{c} mod 2 = 0 if ceil (O · 2^{µ} + ceil (i · M))/Nₛₗₒₜ^{frame, µ}) mod 2 = 0, or in a frame in frames having a system frame number SFN_{c} that satisfies SFN_{c} mod 2 = 1 if ceil (O · 2^{µ} + ceil (i · M))/Nₛₗₒₜ^{frame, µ}) mod 2 = 1. Here, µ ∈ {0, 1, 3, 5, 6} based on the SCS for PDCCH reception in the CORESET. The two slots follow the following:
- For µ ∈ {0, 1} and the SS/PBCH block with index i, the two slots including the associated Type0-PDCCH monitoring occasions are slots n₀ and n₀ + 1, and M, O and the index of the first symbol of the CORESET in slots n₀ and n₀ + 1 are given by the corresponding tables in a specification. The UE does not expect to be configured with M = 1/2 or M = 2 when N_{SSB}^{QCL} = 1.
- For µ = 3 and the SS/PBCH block with index i, the two slots including the associated Type0-PDCCH monitoring occasions are slots n₀ and n₀ + 1, and M, O and the index of the first symbol of the CORESET in slots n₀ and n₀ + 4 are given by the corresponding tables in a specification.
- For µ = 5 and the SS/PBCH block with index i, the two slots including the associated Type0-PDCCH monitoring occasions are slots n₀ and n₀ + 4, and M, O and the index of the first symbol of the CORESET in slots n₀ and n₀ + 4 are given by the corresponding tables in a specification. Here, X = 1.25.
- For µ = 6 and the SS/PBCH block with index i, the two slots including the associated Type0-PDCCH monitoring occasions are slots n₀ and n₀ + 8, and M, O and the index of the first symbol of the CORESET in slots n₀ and n₀ + 8 are given by the corresponding tables in a specification. Here, X = 0.625.

### (Analysis)

A SCS larger than 960 kHz is being studied. However, the design of signals with SCS larger than 960 kHz has not been sufficiently studied. In addition, in DL initial access using an SCS larger than 960 kHz, an operation of monitoring a PDCCH for scheduling SIB1 has not been sufficiently studied. Unless studies on such design/operation is sufficient, degradation in communication quality/communication throughput reduction may occur.

Thus, the inventors of the present invention came up with the idea of design/operation of a signal with an SCS larger than 960 kHz.

### (Various Replacements)

Embodiments according to the present disclosure will be described in detail with reference to the drawings as follows. Note that each of the following embodiments (for example, each case) may be used alone or at least two of the embodiments may be applied in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC signaling, an RRC IE, an RRC parameter, and a higher layer parameter may be interchangeably interpreted.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, "having a capability of." may be interchangeably interpreted as "supporting/reporting a capability of".

In the present disclosure, ceil (x) and a ceiling function may be interchangeably interpreted. In the present disclosure, floor (x) and a floor function may be interchangeably interpreted. In the present disclosure, sqrt (x) and square root (root) may be interchangeably interpreted. In the present disclosure, x mod y, mod (x, y), a mod function, and a modulo operation may be interchangeably interpreted. In the present description, Σᵢ = _{M}^{N}f(i), the summation of f(i) over i = M, M + 1, ..., N, f(M) + f(M + 1) +. + f(N), may be interchangeably interpreted. C(n, k) may be interchangeably interpreted as the number of combinations (combinatorial coefficient) of selecting k values from n values, binomial coefficients, ₙCₖ and Cₙ^{k}.

In the present disclosure, a_{b}, a_b, and a notation in which b is attached to the lower right of a may be interchangeably interpreted. In the present disclosure, a^{c}, a^c, and a notation in which c is attached to the upper right of a may be interchangeably interpreted. In the present disclosure, a_{b}^{c}, a_b^c, and a notation in which b is attached to the lower right of a and c is attached to the upper right may be interchangeably interpreted. In the present disclosure, x⁻ may be represented by putting ⁻ over x or may be referred to as x tilde. In the present disclosure, x⁻ may be represented by putting - over x, or may be referred to as x bar.

In the present disclosure, the frequency range corresponding to FR1 may be 410 to 7125 MHz. In the present disclosure, FR2 may include FR2-1 and FR2-2, a frequency range corresponding to FR2-1 may be 24250 to 52600 MHz, and a frequency range corresponding to FR2-1 may be 52600 to 71000 MHz.

The following abbreviations may be used in the present disclosure.
- time division multiplexing: TDM
- time-division-multiplexed: TDMed
- frequency division multiplexing: FDM
- frequency-division multiplexed: FDMed
- space division multiplexing: SDM
- space-division multiplexed: SDMed

In the present disclosure, the first symbol/slot/SSB and the starting symbol/slot/SSB may be interchangeably interpreted.

In the present disclosure, system information (SI), a part of system information, partial system information, an MIB, an SIB, SIB1, SIBx, a downlink shared channel carrying system information, and a PDSCH carrying system information may be interchangeably interpreted.

In the present disclosure, the specific condition may include at least one of the following conditions: FR, band (frequency band), scenario, SSB SCS, PDCCH SCS, SCS combination type, SCS combination, multiplexing pattern, and relationship between SSB SCS and PDCCH SCS.

In the present disclosure, SCS, 15 * 2^{µ} kHz, SCS configuration, µ, and numerology may be interchangeably interpreted. In the present disclosure, SCS larger than 960 kHz and µ greater than 6 may be interchangeably interpreted. In the present disclosure, a reference SCS, µ_0, and µ_ref may be interchangeably interpreted. In the present disclosure, the first symbol and the start symbol may be interchangeably interpreted. In the present disclosure, a symbol index, a symbol position, and a time position may be interchangeably interpreted. In the present disclosure, an SSB pattern, an SSB position pattern, an SSB start symbol index, and a first symbol index of SSB may be interchangeably interpreted.

In the present disclosure, CORESET, CORESET #0, controlResourceSetZero, Type0-PDCCH, PDCCH scheduling SIB1 PDSCH, CORESET for PDCCH scheduling SIB1 PDSCH, CORESET for Type0-PDCCH, Type0-PDCCH monitoring occasion, Type0-PDCCH CSS set, CORESET for Type0-PDCCH CSS set, search space #0, searchSpaceZero, CORESET for search space #0 may be interchangeably interpreted.

In the present disclosure, a PDCCH SCS, a CORESET SCS, and a CORESET #0 SCS may be interchangeably interpreted.

### (Radio Communication Method)

### <Embodiment 1>

This embodiment relates to an SCS of SSB.

A new SCS (specific SCS) larger than 960 kHz for an SSB is supported.

An SSB SCS (specific SCS) larger than 960 kHz may be applicable to a specific condition.

In the present disclosure, the specific condition may include at least one of a specific FR, a specific band, and a specific scenario. The specific band may include at least one of a band exceeding 71GHz, a band of a sub terahertz, and a band of a terahertz. The specific scenario may include at least one of a terrestrial network (TN), a non-terrestrial network (NTN), TDD, FDD, a licensed band, and an unlicensed band.

The determination of the SSB SCS in the specific condition may follow at least one of the following several options.

- Option 1: SSB SCS is provided by the higher layer parameter ssbSubcarrierSpacing. For the specific condition, a new candidate value for the higher layer parameter ssbSubcarrierSpacing may be supported/introduced. The SSB in this option may be a measurement SSB.
- Option 2: SSB SCS based on the specific condition is defined. A specification may define the SCS of the SSB in the specific condition.
- Option 3: The UE performs blind detection of the SSB SCS, based on the applicable case. The applicable case may be determined based on the specific condition. The specification may define a set of applicable values of the SSB SCS in the specific condition. The UE may blindly detect the SSB by using the set of applicable values and the SSB pattern corresponding to the applicable value.
- Option 4: SSB SCS is configured/indicated by configuration/indication on other cells. Such another cell may be a cell in a lower frequency band. The SCS of the SSB on the cell in the specific condition may be determined based on a parameter on another cell in a lower frequency band.
- Option 5: The UE performs blind detection of the SSB SCS, based on the applicable case. The applicable case is configured/indicated by configuration/indication on another cell. Such another cell may be a cell in a lower frequency band. The set of applicable values of SSB SCS of a cell may be indicated by a parameter on another cell. The UE may blindly detect the SSB by using the set of applicable values and the SSB pattern corresponding to the applicable value.

According to this embodiment, the UE can appropriately determine the SCS of the SSB. When an SCS higher than 960 KHz is supported in SSB and other signals/channels, supporting single numerology operation can simplify the implementation.

### <Embodiment 2>

This embodiment relates to design of SSB pattern.

### <<Embodiment 2-1>>

A number for restriction of SSBs for a specific SCS larger than 960 kHz may be defined.

The maximum number of SSB indices in one cell may be greater than 64. The maximum number may be, for example, 96/128/160/192, or the like. The maximum number may be defined in the specification depending on the SCS and the specific condition.

The maximum number of SSBs transmitted within specific time may be greater than 64. The maximum number may be, for example, 96/128/160/192, or the like. The maximum number may be defined in a specification depending on at least one of the specific SCS and the specific condition.

The specific time may be defined in a specification or may be indicated in the MIB. The specific time may be one half frame, X frames/half frames/subframes/slots, X milliseconds/seconds/minutes/hours, or the like. The specific time may depend on the specific condition. The maximum number of SSBs transmitted within specific time may be greater than 64. For example, at an FR higher than 72 GHz, the maximum number of SSBs transmitted in a frame may be greater than 64.

In the present disclosure, the specific time, the specific duration, and the half frame may be interchangeably interpreted.

### <<Embodiment 2-2>>

For a specific SCS larger than 960 kHz, a plurality of SSB slots in one burst may follow at least one of the following several options. The SSB slot may be a slot including an SSB.

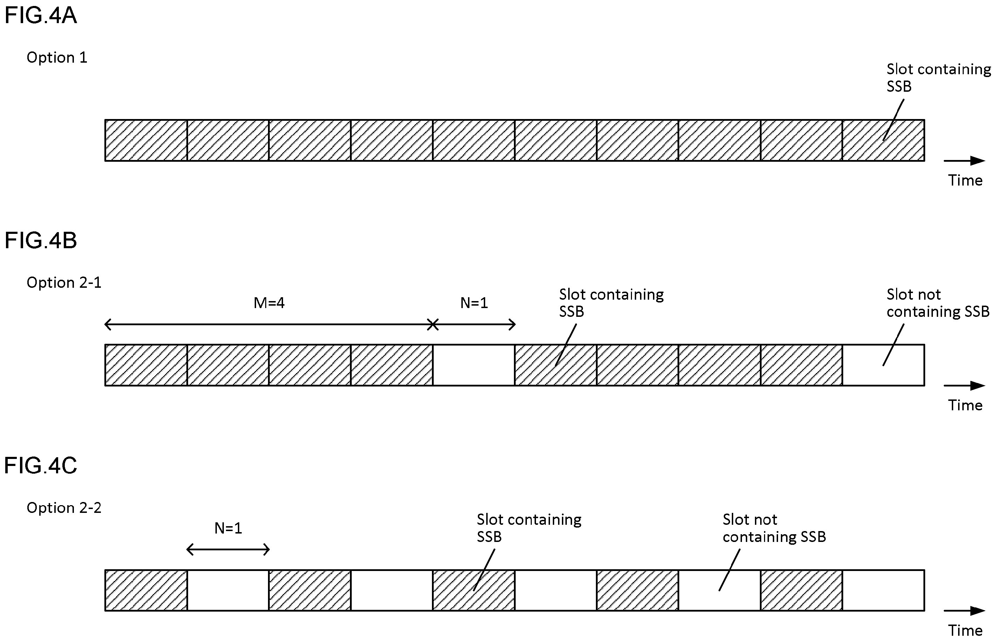

- Option 1: The SSB slot is a plurality of consecutive slots (FIG. 4A). For example, the SSB slots may correspond to slot indices n - 0, 1, 2, 3, 4, 5, ..., Nₘₐₓ - 1 within specific time. The value of Nₘₐₓ for a specific SCS may depend on the maximum number of SSB indices in a cell in Embodiment 2-1, or may depend on the maximum number (for example, Lₘₐₓ) of SSBs transmitted within specific time in Embodiment 2-1. For example, when there are two SSBs corresponding to different SSB indices in one slot, Nₘₐₓ = Lₘₐₓ/2 may be satisfied. For example, when there are two SSBs corresponding to the same SSB index in one slot, Nₘₐₓ = Lₘₐₓ may be satisfied.
- Option 2: The SSB slots are a plurality of discontinuous slots. There may be a slot in which no SSB is transmitted between SSB slots in one burst. This option may follow at least one of the following some options 2-x.

-- Option 2-1: There may be a gap of N slots every M consecutive slots containing SSB (FIG. 4B). The gap may be a slot that does not include an SSB. For a plurality of different SCSs larger than 960 kHz, the values of N and M may be the same, or the values of N and M may be different. For example, the values of N and M may be scaled by the SCS. The values of N and M may depend on at least one of the SSB SCS (specific SCS) and the specific condition.
-- Option 2-2: There may be a gap of N slots between two slots containing SSBs (FIG. 4C). The gap may be a slot that does not include an SSB. For a plurality of different SCSs larger than 960 kHz, the values of N may be the same, or the values of N may be different. For example, the values of N may be scaled by the SCS. The values of N may depend on at least one of the SSB SCS (specific SCS) and the specific condition.

### <<Embodiment 2-3>>

The SSB symbol position for a specific SCS larger than 960 kHz may follow at least one of the following several choices.

### - Choice 1

The SSB symbol position for a specific SCS may be based on the SSB position (reference SSB pattern) for the reference SCS. The reference SCS may be used to determine the SSB symbol position for an SCS larger than 960 kHz. The reference SCS may be different from the SSB SCS, or may be 960 kHz or lower. This choice may follow at least one of the following several choices 1-x.

-- Choice 1-1: SSBs on one or more symbols of a specific SCS are received at SSB positions (reference SSB pattern) for a reference SCS. The time-location range (span) of the SSB of the specific SCS may be the same as the time-location range of the SSB of the reference SCS. This choice may follow at least one of the following several examples 1-1-x.
--- Example 1-1-0 (Generalization of Choice 1-1): The SSB start symbol position for the reference SCS configuration µ_0 may be {s(1), s(2), ..., s(P)} + 14 * M * n. The parameters in this example may be given by followings.
---- M may represent the number of slots for periodicity (repetition) of the SSB pattern. The SSB position may be repeated every M slots. The duration of the M slots may be less than the periodicity of one SSB. M may be defined by a specification or may be indicated/configured by an MIB.
---- s(1), s(2), ..., s(P) may represent SSB start symbol positions in every M slots. P may be the number of SSBs per M slots. s(1), s(2), ..., s(P) may be defined by a specification or may be indicated/configured by an MIB.
---- The SSB start symbol position in the SCSµ may be {s(1) * 2^{µ-µ_0}, s(1) * 2^{µ - µ_0} + X * k, s(2) * 2^{µ - µ_0}, s(2) * 2^{µ - µ_0} + X * k, ..., s(P) * 2^{µ - µ_0}, s(P) * 2^{µ - µ_0} + X * k} + 14 * M * 2^{µ - µ_0} * n.
---- k = 1, 2, 3, ..., 2^{µ - µ_0} - 1.
---- X may represent the number of symbols per SSB transmission.
---- n = 0, 1, 2, 3, ..., Lₘₐₓ/(P * 2^{µ - µ_0}).
---- Lₘₐₓ may be the maximum number of SSB indices or the maximum number of SSBs transmitted within one specific time.
--- Example 1-1-1: The reference SCS is 480 or 960 kHz in FR2-2. The reference SSB pattern may be case F/G. The parameters in this example may be given by followings.
---- The first symbol of the plurality of candidate SSBs may be {2 * 2^{µ - µ_0}, 2 * 2^{µ - µ_0} + 4 * k, 9 * 2^{µ - µ_0}, 9 * 2^{µ - µ_0} + 4 * k} + 14 * 2^{µ - µ_0} * n.
---- k = 1, 2, 3, ..., 2^{µ - µ_0} - 1.
---- n = 0, 1, 2, 3, ..., Lₘₐₓ/2^{µ - µ_0 + 1}.
---- Lₘₐₓ may be the maximum number of SSB indices or the maximum number of SSBs transmitted within one specific time.
---- µ_0 represents the reference SCS (15 * 2^{µ_0} kHz). For example, µ_0 = 5 for the reference SCS 480 kHz and µ_0 = 6 for the reference SCS 960 kHz.
---- µ represents a specific SCS (15 * 2^{µ} kHz). For example, µ = 7 for the reference SCS 1920 kHz, µ = 8 for the reference SCS 3840 kHz, and µ = 9 for the reference SCS 7680 kHz.
--- Example 1-1-2: The reference SCS is 120 or 240 kHz in FR2-1. The reference SSB pattern may be case D/E. The parameters in this example may be given by followings.
---- The first symbol of the plurality of candidate SSBs may be {2 * 2^{µ - 2}, 2 * 2^{µ - 2} + 4 * k, 8 * 2^{µ - 2}, 8 * 2^{µ - 2} + 4 * k} + 14 * 2^{µ - 2} * n.
---- k = 1, 2, 3, ..., 2^{µ - 2} - 1.
---- n = 0, 1, 2, 3, ..., Lₘₐₓ/2)^{µ - 1}.
---- Lₘₐₓ may be the maximum number of SSB indices or the maximum number of SSBs transmitted within one specific time.
---- µ represents a specific SCS (15 * 2^{µ} kHz). For example, µ = 7 for the reference SCS 1920 kHz, µ = 8 for the reference SCS 3840 kHz, and µ = 9 for the reference SCS 7680 kHz.
--- Example 1-1-3: The reference SCS is 15 kHz in FR1 or a 30 kHz in case B. The reference SSB pattern may be case A/B. The parameters in this example may be given by followings.
---- The first symbol of the plurality of candidate SSBs may be {2 * 2^{µ}, 2 * 2^{µ} + 4 * k, 8 * 2^{µ}, 8 * 2^{µ} + 4 * k} + 14 * 2^{µ} * n.
---- k = 1, 2, 3, ..., 2^{µ} - 1.
---- n = 0, 1, 2, 3, ..., Lₘₐₓ/2^{µ + 1}.
---- Lₘₐₓ may be the maximum number of SSB indices or the maximum number of SSBs transmitted within one specific time.
---- µ represents a specific SCS (15 * 2^{µ} kHz). For example, µ = 7 for the reference SCS 1920 kHz, µ = 8 for the reference SCS 3840 kHz, and µ = 9 for the reference SCS 7680 kHz.
--- Example 1-1-4: The reference SCS is 30 kHz of case C in FR1. The reference SSB pattern may be case C. The parameters in this example may be given by followings.
---- The first symbol of the plurality of candidate SSBs may be {2 * 2^{µ - 1}, 2 * 2^{µ - 1} + 4 * k, 8 * 2^{µ - 1}, 8 * 2^{µ - 1} + 4 * k} + 14 * 2^{µ - 1} * n.
---- k = 1, 2, 3, ..., 2^{µ - 1} - 1.
---- n = 0, 1, 2, 3, ..., Lₘₐₓ/2^{µ}.
---- Lₘₐₓ may be the maximum number of SSB indices or the maximum number of SSBs transmitted within one specific time.
---- µ represents a specific SCS (15 * 2^{µ} kHz). For example, µ = 7 for the reference SCS 1920 kHz, µ = 8 for the reference SCS 3840 kHz, and µ = 9 for the reference SCS 7680 kHz.

In each example, index 0 may correspond to the first symbol of the first slot within particular time.

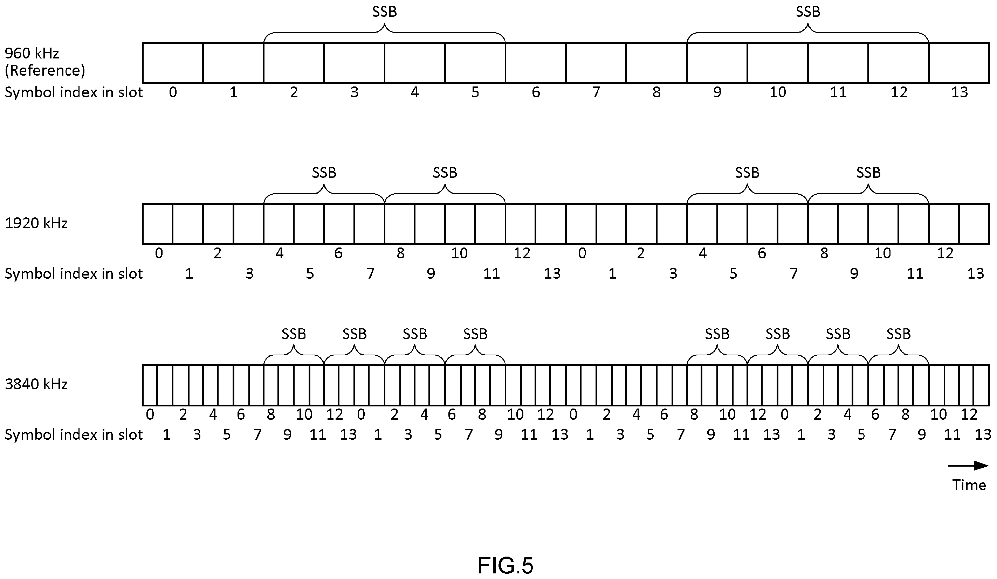

FIG. 5 shows an example of an SSB pattern of Example 1-1-1. In this example, the reference SCS is 960 kHz and the reference SSB pattern is case G. In case G, the first symbol indices of the candidate SSBs are {2, 9, ...}. Time of each candidate SSB is four symbols, and thus symbol indices of a time-location range of the candidate SSB are {2, 3, 4, 5, 9, 10, 11, 12, ...}. The time-location range of the candidate SSB for the specific SCS may correspond to the time-location range of the candidate SSB for the reference SCS. For a specific SCS = 1920 kHz, the first symbol index of the candidate SSB may be {4, 8, 18, 22, ...}, and the time of each candidate SSB may be 8 symbols of the specific SCS. For a specific SCS = 3840 kHz, the first symbol index of the candidate SSB may be {8, 12, 16, 20, 36, 40, 44, 48, ...}, and the time of each candidate SSB may be 16 symbols of the specific SCS.

-- Variation of Choice 1-1: Choice 1-1 will be a plurality of SSBs contiguous without gaps. In the SCS larger than 960 kHz, the time required for the UE to switch a beam for a plurality of consecutive SSBs may not be sufficient. A variation of choice 1-1 may follow at least one of the following several enhancements.
--- The same SSB index is applied to a plurality of consecutive SSBs. The UE may assume that the same DL beam is used for transmission of a plurality of consecutive SSBs having the same SSB index.
--- The maximum number of SSBs transmitted within specific time may be greater than the maximum number of SSB indices.
--- In Example 1-1-1/1-1-2/1-1-3, n = 0, 1, 2, 3, ..., Lₘₐₓ/,2. Lₘₐₓ may be the maximum number of SSB indices for a specific SCS.
--- Variation: A plurality of SSB using the same SSB index may be considered as multiple repetitions of SSB. The number of repetitions for one SSB index may follow at least one of the following several choices 1-1-x.
---- Choice 1-1-1: The number of iterations is defined in a specification. For example, the number of repetitions may depend on at least one of a specific SCS and a specific condition.
---- Choice 1-1-2: The number of repetitions is indicated by a parameter in the MIB.
---- Choice 1-1-3: The number of repetitions is determined based on a rule. The rule may be at least one of the following several rules.
----- A set of a plurality of consecutive SSBs is multiple repetitions for one SSB index.
----- A set of a plurality of SSBs with gaps smaller than a given threshold is multiple repetitions for one SSB index. The value of the threshold may depend on the time required for the UE to switch the SSB reception beam for a specific SCS and a specific condition.
-- Choice 1-2: The starting position of each SSB in a specific SCS is aligned with the starting position of an SSB in a reference SCS. Choice 1-2 is an improvement on Choice 1-1 to ensure sufficient time between a plurality of SSBs for SSB reception beam switching at the UE. This choice may follow at least one of the following several examples 1-2-x.
--- Example 1-2-0 (Generalization of Choice 1-2): The SSB start symbol position for the reference SCS configuration µ_0 may be {s(1), s(2), ..., s(P)} + 14 * M * n. The parameters in this example may be given by followings.
---- M may represent the number of slots for periodicity (repetition) of the SSB pattern. The SSB position may be repeated every M slots. The duration of the M slots may be less than the periodicity of one SSB. M may be defined by a specification or may be indicated/configured by an MIB.
---- s(1), s(2), ..., s(P) may represent SSB start symbol positions in every M slots. P may be the number of SSBs per M slots. s(1), s(2), ..., s(P) may be defined by a specification or may be indicated/configured by an MIB.
---- The SSB start symbol position in SCSµ may be aligned to {s(1) * 2^{µ - µ_0}, s(2) * 2^{µ - µ_0}, ..., s(P) * 2^{µ - µ_0}} + 14 * M * 2^{µ - µ_0} * n. Alternatively, as a variation, the SSB end symbol position in the SCSµ may be aligned to {(s(1) + X) * 2^{µ - µ_0} - X, (s(2) + X) * 2^{µ-µ_0} - X, ..., (s(P) + X) * 2^{µ - µ_0} - X} + 14 * M * 2^{µ - µ_0} * n.
---- k = 1, 2, 3, ..., 2^{µ - µ_0} - 1.
---- X may represent the number of symbols per SSB transmission.
---- n = 0, 1, 2, 3, ..., Lₘₐₓ/P.
---- Lₘₐₓ may be the maximum number of SSB indices or the maximum number of SSBs transmitted within one specific time.
--- Example 1-2-1: The reference SCS is 480 or 960 kHz in FR2-2. The reference SSB pattern may be case F/G. The parameters in this example may be given by followings.
---- The first symbol of the plurality of candidate SSBs may be {2 * 2^{µ - µ_0}, 9 * 2^{µ - µ_0}} + 14 * 2^{µ - µ_0} * n.
---- n = 0, 1, 2, 3, ..., Lₘₐₓ/2.
---- Lₘₐₓ may be the maximum number of SSB indices or the maximum number of SSBs transmitted within one specific time.
---- µ_0 represents the reference SCS (15 * 2^{µ_0} kHz). For example, µ_0 = 5 for the reference SCS 480 kHz and µ_0 = 6 for the reference SCS 960 kHz.
---- µ represents a specific SCS (15 * 2^{µ} kHz). For example, µ = 7 for the reference SCS 1920 kHz, µ = 8 for the reference SCS 3840 kHz, and µ = 9 for the reference SCS 7680 kHz.
--- Example 1-2-2: The reference SCS is 120 or 240kHz in FR2-1. The reference SSB pattern may be case D/E. The parameters in this example may be given by followings.
---- The first symbol of the plurality of candidate SSBs may be {2 * 2^{µ - 2}, 8 * 2^{µ - 2}} + 14 * 2^{µ - 2} * n.
---- n = 0, 1, 2, 3, ..., Lₘₐₓ/2.
---- Lₘₐₓ may be the maximum number of SSB indices or the maximum number of SSBs transmitted within one specific time.
---- µ represents a specific SCS (15 * 2^{µ} kHz). For example, µ = 7 for the reference SCS 1920 kHz, µ = 8 for the reference SCS 3840 kHz, and µ = 9 for the reference SCS 7680 kHz.
--- Example 1-2-3: The reference SCS is 15 kHz in FR1 or a 30 kHz in case B. The reference SSB pattern may be case A/B. The parameters in this example may be given by followings.
---- The first symbol of the plurality of candidate SSBs may be {2 * 2^{µ}, 8 * 2^{µ}} + 14 * 2^{µ} * n.
---- n = 0, 1, 2, 3, ..., Lₘₐₓ/2.
---- Lₘₐₓ may be the maximum number of SSB indices or the maximum number of SSBs transmitted within one specific time.
---- µ represents a specific SCS (15 * 2^{µ} kHz). For example, µ = 7 for the reference SCS 1920 kHz, µ = 8 for the reference SCS 3840 kHz, and µ = 9 for the reference SCS 7680 kHz.
--- Example 1-2-4: The reference SCS is 30 kHz of case C in FR1. The reference SSB pattern may be case C. The parameters in this example may be given by followings.
---- The first symbol of the plurality of candidate SSBs may be {2 * 2^{µ - 1}, 8 * 2^{µ - 1}} + 14 * 2^{µ - 1} * n.
---- n = 0, 1, 2, 3, ..., Lₘₐₓ/2.
---- Lₘₐₓ may be the maximum number of SSB indices or the maximum number of SSBs transmitted within one specific time.
---- µ represents a specific SCS (15 * 2^{µ} kHz). For example, µ = 7 for the reference SCS 1920 kHz, µ = 8 for the reference SCS 3840 kHz, and µ = 9 for the reference SCS 7680 kHz.

In each example, index 0 may correspond to the first symbol of the first slot within particular time.

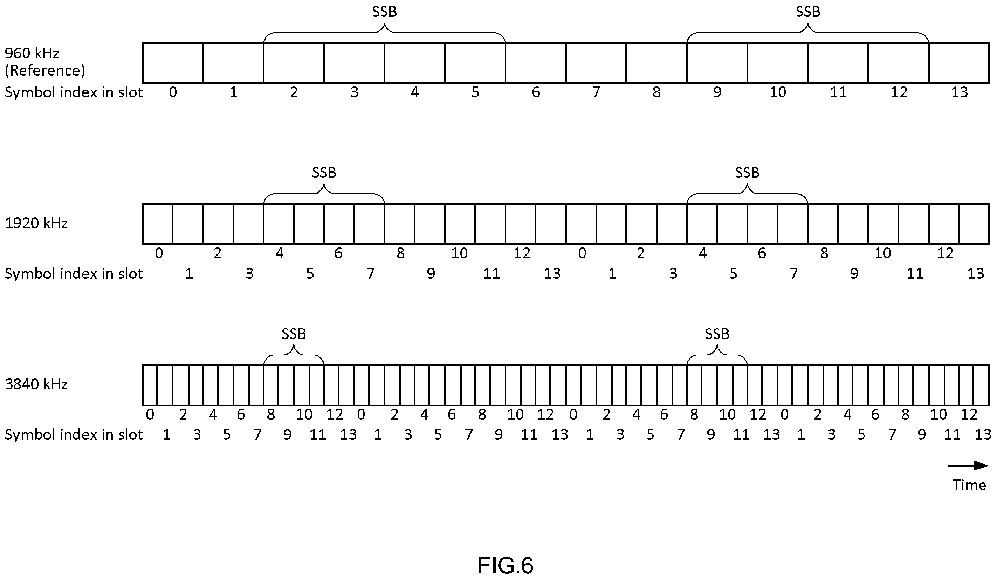

FIG. 6 shows an example of an SSB pattern of Example 1-2-1. In this example, the reference SCS is 960 kHz and the reference SSB pattern is case G. In case G, the first symbol indices of the candidate SSBs are {2, 9, ...}. Time of each candidate SSB is four symbols, and thus symbol indices of the candidate SSB are {2, 3, 4, 5, 9, 10, 11, 12, ...}. The start time location of the candidate SSB for the specific SCS may correspond to the start time location of the candidate SSB for the reference SCS. For a specific SCS = 1920 kHz, the first symbol index of the candidate SSB may be {4, 18, ...}, and the time of each candidate SSB may be 4 symbols of the specific SCS. For a specific SCS = 3840 kHz, the first symbol index of the candidate SSB may be {8, 36, ...}, and the time of each candidate SSB may be 4 symbols of the specific SCS.

-- Variation of Choice 1-2: The end position of each SSB in the specific SCS is aligned with the end position of the SSB in the reference SCS. This variation may follow at least one of the following examples 1-2a-x.
--- Example 1-2a-1: The reference SCS is 480 or 960 kHz in FR2-2. The reference SSB pattern may be case F/G. The parameters in this example may be given by followings.
----- The first symbol of the plurality of candidate SSBs may be {6 * 2^{µ - µ_0} - 4, 13 * 2^{µ - µ_0} - 4} + 14 * 2^{µ - µ_0} * n.
---- n = 0, 1, 2, 3, ..., Lₘₐₓ/2.
---- Lₘₐₓ may be the maximum number of SSB indices or the maximum number of SSBs transmitted within one specific time.
---- µ_0 represents the reference SCS (15 * 2^{µ_0} kHz). For example, µ_0 = 5 for the reference SCS 480 kHz and µ_0 = 6 for the reference SCS 960 kHz.
---- µ represents a specific SCS (15 * 2^{µ} kHz). For example, µ = 7 for the reference SCS 1920 kHz, µ = 8 for the reference SCS 3840 kHz, and µ = 9 for the reference SCS 7680 kHz.
--- Example 1-2a-2: The reference SCS is 120 or 240kHz in FR2-1. The reference SSB pattern may be case D/E. The parameters in this example may be given by followings.
---- The first symbol of the plurality of candidate SSBs may be {6 * 2^{µ - 2} - 4, 12 * 2^{µ - 2} - 4} + 14 * 2^{µ - 2} * n.
---- n = 0, 1, 2, 3, ..., Lₘₐₓ/2.
---- Lₘₐₓ may be the maximum number of SSB indices or the maximum number of SSBs transmitted within one specific time.
---- µ represents a specific SCS (15 * 2^{µ} kHz). For example, µ = 7 for the reference SCS 1920 kHz, µ = 8 for the reference SCS 3840 kHz, and µ = 9 for the reference SCS 7680 kHz.
--- Example 1-2a-3: The reference SCS is 15 kHz in FR1 or a 30 kHz in case B. The reference SSB pattern may be case A/B. The parameters in this example may be given by followings.
---- The first symbol of the plurality of candidate SSBs may be {6 * 2^{µ} - 4, 12 * 2^{µ} - 4} + 14 * 2^{µ} * n.
---- n = 0, 1, 2, 3, ..., Lₘₐₓ/2.
---- Lₘₐₓ may be the maximum number of SSB indices or the maximum number of SSBs transmitted within one specific time.
---- µ represents a specific SCS (15 * 2^{µ} kHz). For example, µ = 7 for the reference SCS 1920 kHz, µ = 8 for the reference SCS 3840 kHz, and µ = 9 for the reference SCS 7680 kHz.
--- Example 1-2a-4: The reference SCS is 30 kHz of case C in FR1. The reference SSB pattern may be case C. The parameters in this example may be given by followings.
   The first symbol of the plurality of candidate SSBs may be {6 * 2^{µ - 1} - 4, 12 * 2^{µ - 1} - 4} + 14 * 2^{µ - 1} * n.
---- n = 0, 1, 2, 3, ..., Lₘₐₓ/2.
---- Lₘₐₓ may be the maximum number of SSB indices or the maximum number of SSBs transmitted within one specific time.
---- µ represents a specific SCS (15 * 2^{µ} kHz). For example, µ = 7 for the reference SCS 1920 kHz, µ = 8 for the reference SCS 3840 kHz, and µ = 9 for the reference SCS 7680 kHz.

In each example, index 0 may correspond to the first symbol of the first slot within particular time.

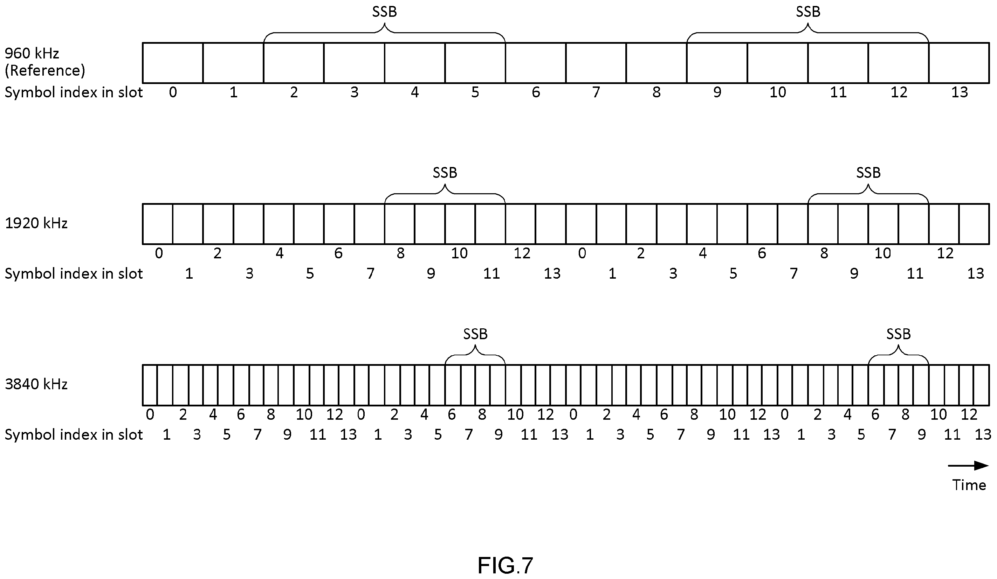

FIG. 7 shows an example of an SSB pattern of Example 1-2a-1. In this example, the reference SCS is 960 kHz and the reference SSB pattern is case G. In case G, the first symbol indices of the candidate SSBs are {2, 9, ...}. Time of each candidate SSB is four symbols, and thus symbol indices of the candidate SSB are {2, 3, 4, 5, 9, 10, 11, 12, ...}. The start time location of the candidate SSB for the specific SCS may correspond to the start time location of the candidate SSB for the reference SCS. For a specific SCS = 1920 kHz, the first symbol index of the candidate SSB may be {8, 22, ...}, and the time of each candidate SSB may be 4 symbols of the specific SCS. For a specific SCS = 3840 kHz, the first symbol index of the candidate SSB may be {20, 38, ...}, and the time of each candidate SSB may be 4 symbols of the specific SCS.

### - Choice 2

The SSB symbol position for a specific SCS is determined according to the same principle as the SSB pattern design in case A/F/G. The SSB symbol position for a specific SCS may be the same as the SSB symbol position of case A/F/G in each slot. For a specific SCS, one or two SSBs may be allocated/transmitted per slot.

This choice may follow at least one of the following several examples 2-x.

-- Example 2-1: One SSB is allocated/transmitted in one slot. This example may have at least one of the following features.
--- The plurality of slots including the SSB may be a plurality of consecutive slots or a plurality of non-consecutive slots.
--- The first symbol of the candidate SSB may have an index of {x} + 14 * n. n may be an index of a slot including an SSB as in Embodiment 2-2.
--- The value of x may represent the first symbol index of the SSB within each SSB slot. The first symbol index of the SSB in each SSB slot may be the same. The value of x may be 0/1/2/3/4/5/6/7/8/9/10. The value of x may be defined by a specification or indicated by a MIB.
-- Example 2-2: Two SSBs are allocated/transmitted in one slot. This example may have at least one of the following features.
--- The plurality of slots including the SSB may be a plurality of consecutive slots or a plurality of non-consecutive slots.
--- The first symbol of the candidate SSB may have an index of {x, x + 4 + y} + 14 * n. n may be an index of a slot including an SSB as in Embodiment 2-2.
--- The value of x may represent the first symbol index of the first SSB within each SSB slot. The first symbol index of the first SSB in each SSB slot may be the same. The value of x may be 0/1/2/3/4/5/6. The value of x may be defined by a specification or indicated by a MIB.
--- The value of y may represent a gap between two SSBs in each SSB slot. The value of y may be 0/1/2/3/4/5/6. The value of y may be defined by a specification or indicated by a MIB. The value of y may depend on at least one of the SSB SCS (specific SCS) and the specific condition.
--- x + y < 7
-- Variation of Example 2-2: Two SSBs are allocated/transmitted in one slot. The two SSBs may have the same SSB index or may have different SSB indices. Whether the SSB indices of the two SSBs are the same or different from each other may depend on a gap between the two SSBs in one slot. For example, if y is less than a given value, the two SSBs have the same SSB index; otherwise, the two SSBs have different SSB indices.

In each example, index 0 may correspond to the first symbol of the first slot within particular time.

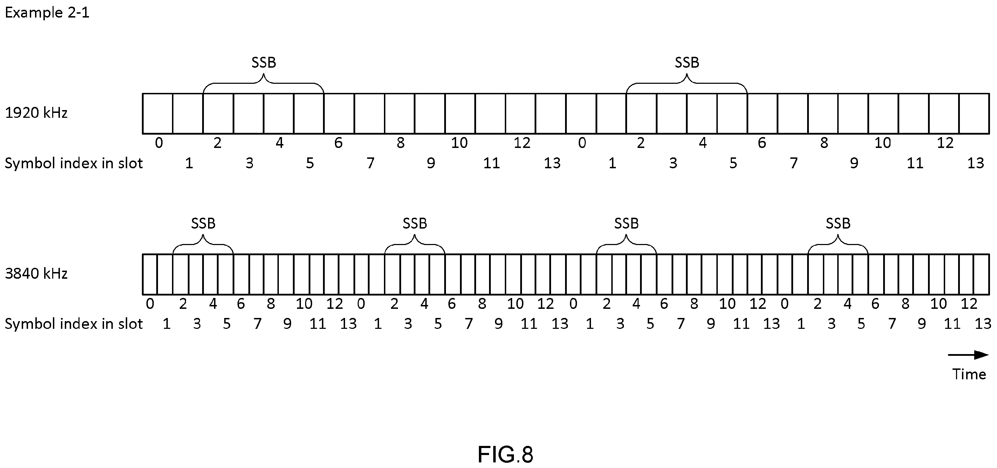

FIG. 8 shows an example of an SSB pattern of Example 2-1. In specific SCS = 1920 kHz and 3840 kHz, the first symbol index of the candidate SSB for the first symbol of each slot is {2}, and the first symbol index of the candidate SSB for the first symbol of the first slot within a specific time is {2, 9, 16, 23, 30, 37, 44, 51, ...}. The time of each candidate SSB may be 4 symbols of the specific SCS.

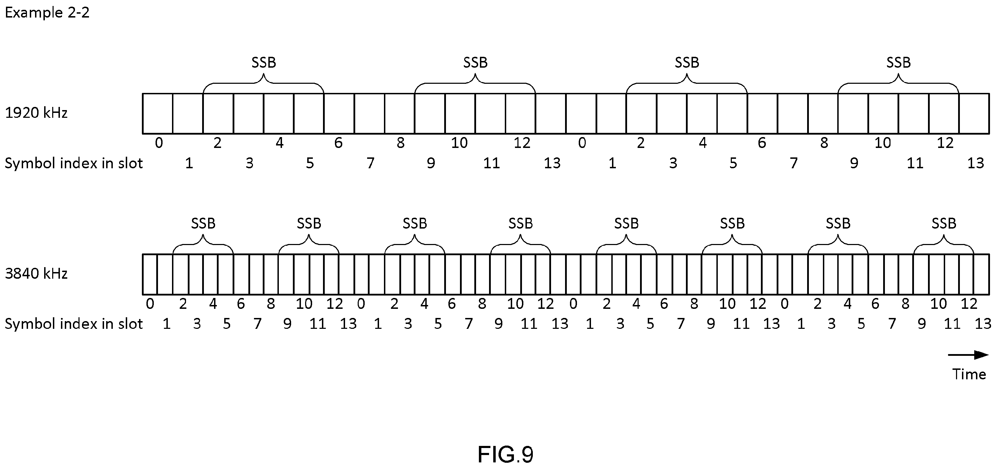

FIG. 9 shows an example of an SSB pattern of Example 2-2. In specific SCS = 1920 kHz and 3840 kHz, the first symbol index of the candidate SSB for the first symbol of each slot is {2, 9}, and the first symbol index of the candidate SSB for the first symbol of the first slot within a specific time is {2, 9, 16, 23, 30, 37, 44, 51, ...}. The time of each candidate SSB may be 4 symbols of the specific SCS.

### - Choice 3

The number of gap symbols between any two adjacent (consecutive indices) SSBs may be the same. Even if the two SSBs are located in different slots, the number of gap symbols between the two SSBs may be the same.

The gap may be for ensuring sufficient time for the UE to switch the SSB reception beam for different SSB indices.

For different SCSs, the absolute length of the gap between the two adjacent SSBs may be the same.

The gap may be a distance between the end symbol of the first SSB and the start symbol of the second SSB in the two adjacent SSBs.

The length of the gap may be y symbols/slots. The value of y may be defined by a specification or indicated by a MIB. The unit of y (symbol or slot) may be defined by a specification or indicated by the MIB.

The length of the gap may depend on at least one of the SSB SCS (specific SCS) and the specific condition.

The length of the gap may be scaled based on the length of the gap between a plurality of SSBs in a reference SCS (reference gap length). For example, if the reference SCS is 960 kHz and the length of the gap in the specific SCS is based on the reference gap length of 3 symbols between a plurality of SSBs in the reference SCS, the length of the gap in the 1920 kHz SCS is 6 symbols, the length of the gap in the 3820 kHz SCS is 12 symbols, and the length of the gap in the 7680 kHz SCS is 24 symbols.

When the length scaled based on the reference gap length is longer than 1 slot, the length of the gap of the specific SCS may be determined using a unit of slot. The length of the gap of the specific SCS may be given by the minimum number of slots that is equal to or greater than the length scaled based on the reference gap length. For example, when the reference SCS is 960 kHz and the length of the gap in the specific SCS is based on a reference gap length of 3 symbols between a plurality of SSBs in the reference SCS, the scaled length for the 7680 kHz SCS is 24 symbols, and therefore the length of the gap is 2 slots.

This choice may follow at least one of the following several examples 3-x.

-- Example 3-1: The gap is in units of symbols. The first symbol of the candidate SSB may have an index of {x + (4 + y) * n}. n may be an index of the SSB, and n may be n = 0, 1, 2, 3, ..., Lₘₐₓ - 1. The value of x may indicate the first symbol index of the first SSB within specific time. The value of x may be defined by a specification or indicated by a MIB. The value of y may represent the length of the gap between two SSBs. The length of the gap may be determined according to choice 3-1.
-- Example 3-2: The gap is in units of slots. The first symbol of the candidate SSB may have an index of {x + 14 * y * n}. n may be an index of the SSB, and n may be n = 0, 1, 2, 3, ..., Lₘₐₓ - 1. The value of x may indicate the first symbol index of the first SSB within specific time. The value of x may be defined by a specification or indicated by the MIB. The value of y may represent the length of the gap between two SSBs. The length of the gap may be determined according to choice 3-1.

In each example, index 0 may correspond to the first symbol of the first slot within particular time.

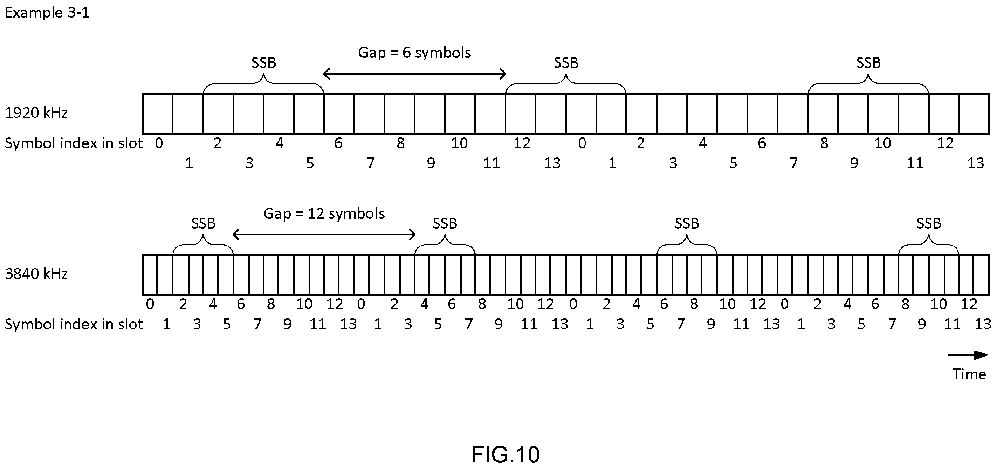

FIG. 10 shows an example of an SSB pattern of Example 3-1. In specific SCS = 1920 kHz and 3840 kHz, the first symbol index of the first SSB within specific time is 2. The reference SCS is 960 kHz, the reference gap length is 3 symbols, and the length of the gap in the specific SCS is obtained by scaling the reference gap length by the specific SCS. The gap in the specific SCS = 1920 kHz is 6 symbols. The gap in the specific SCS = 3840 kHz is 12 symbols.

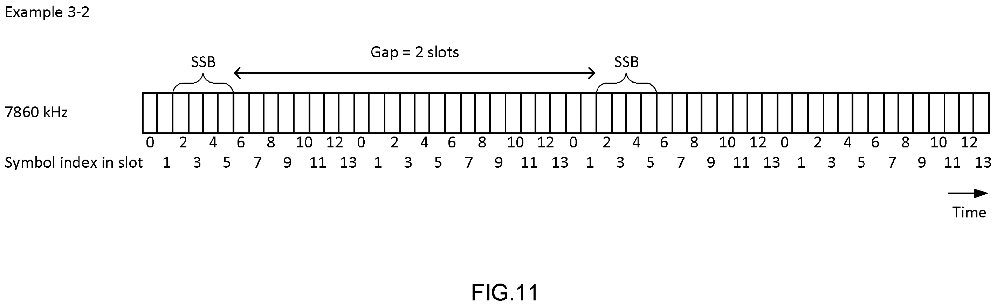

FIG. 11 shows an example of an SSB pattern of Example 3-2. In the specific SCS = 7680 kHz, the first symbol index of the first SSB within specific time is 2. The reference SCS is 960 kHz, the reference gap length is 3 symbols, and the length of the gap in the specific SCS is obtained by scaling the reference gap length by the specific SCS and rounding up to the slot unit. In the specific SCS = 7680 kHz, the scaled length is 24 symbols and the gap in units of the slot is 2 slots.

### - Variation of Choice 3

All SSB indices may be divided into K groups (SSB groups). As in choice 4 described below, in each group, a plurality of SSBs in one group may have gaps of equal lengths. In a plurality of different groups, the symbol positions of the SSBs may be the same. In other words, the SSB pattern may be repeated in all groups.

K SSB groups are assumed, and one SSB group may include N SSBs. The first symbol index of the N SSBs in the first group may be determined based on Choice 3 by replacing Lₘₐₓ in Choice 3 with N. The first symbol index of an SSB of the SSBs in the remaining groups may be determined based on the SSB group index and the slot offset between the SSB groups. For example, when the offset between two adjacent SSB groups is m slots, the first symbol index of a plurality of SSBs in the (k + 1)-th SSB group may be determined by "symbol index in the first SSB group" + k * m * 14 (k = 1, 2, ..., K - 1). k may be the SSB group index {0, 1, 2, ..., K - 1}. The offset between two adjacent SSB groups being m slots may be that, in the two SSBs, an index of the first slot of the first SSB group is i, and an index of the first slot of the second SSB group is i + m.

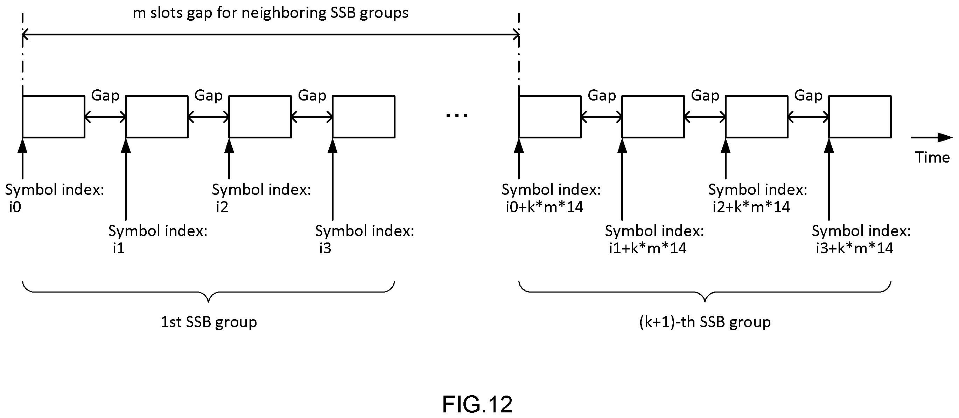

FIG. 12 shows an example of an SSB pattern of Choice 3 of Embodiment 2-3. The first symbol indices of four SSBs in the first SSB group (SSB group index 0) are {i0, i1, i2, i3}. The first symbol indices of four SSBs in (k + 1)-th SSB group (SSB group index k) are {i0 + k * m * 14, i1 + k * m * 14, i2 + k * m * 14, i3 + k * m * 14}.

### <<Variations of Embodiment 2-3>>

In Embodiment 2-3, which choice is applied may depend on the specific SCS. Different choices may be applied depending on the specific SCS.

Choice 1-1/Choice 1-2 may be combined with Choice 2/3. This combination may be according to the following example.

- Example: Choice 2/3 may be applied to the determination/design of SSB locations/patterns for the target SCS (for example, SCS larger than 960 kHz). Choice 1-1/1-2 may be applied to the determination/design of SSB locations/patterns for SCS other than the target (for example, another SCS larger than 960 kHz). In Choice 1-1/1-2, the target SCS may be used as the reference SCS. For example, the SSB pattern for the 1920 kHz SCS may be determined by choice 2/3, and the SSB pattern for the 3840 kHz SCS may be determined by choice 1-1/1-2 using the 1920 kHz SCS as the reference SCS.

According to this embodiment, the UE may appropriately determine the pattern/location of the SSB in a specific SCS.

### <Embodiment 3>

This embodiment relates to CORESET #0 monitoring.

### <<Embodiment 3-1>>

The UE operating under a specific condition may determine an SCS of CORESET #0 (an SCS of a PDCCH). The SCS of CORESET #0 may follow at least one of the following several choices.
- Choice a: The SCS of CORESET #0 is the same as the SCS of the SSB.
- Choice b: The SCS of CORESET #0 is configured/indicated by the base station. For example, the SCS of CORESET #0 may be configured/indicated by subCarrierSpacingCommon in the MIB.

The choices may depend on a specific condition. Different choices may be supported/applied for different specific conditions.

### <<Embodiment 3-2>>

A relationship between the SCS of the SSB (SSB SCS, first SCS) and the SCS of the PDCCH (CORESET #0) (PDCCH SCS, CORESET #0 PDCCH SCS, second SCS) may be defined. The SSB SCS may be X1 KHz and the PDCCH SCS may be X2 KHz.

In the present disclosure, a combination of SSB SCS and PDCCH SCS, an SCS combination, {SSB, PDCCH} SCS, {X1, X2} [kHz], and an SCS combination type may be interchangeably interpreted.

The SCS combination may follow at least one of the following several SCS combination types.

- SCS combination type 1: The SSB SCS is larger than 960 kHz (X1 > 960). The SCS of a PDCCH is larger than 960 kHz (X2 > 960).
   -- Example of SCS combination type 1: {SSB, PDCCH} SCS may be {15 · 2^{µ1}, 15 · 2^{µ2}} kHz. Here, µ1 may be µ1 = 7, 8, 9, 10, 11, 12, ..., and µ2 may be µ2 = 7, 8, 9, 10, 11, 12, .... For example, a candidate for the combination of {SSB, PDCCH} SCS may be at least one of the following several combinations.
   --- {1920, 1920} kHz, {1920, 3840} kHz, {1920, 7680} kHz, {1920, 15360} kHz,
   --- {3840, 1920} kHz, {3840, 3840} kHz, {3840, 7680} kHz, {3840, 15360} kHz,
   --- {7680, 1920} kHz, {7680, 3840} kHz, {7680, 7680} kHz, {7680, 15360} kHz,
   --- {15360, 1920} kHz, {15360, 3840} kHz, {15360, 7680} kHz, {15360, 15360} kHz,
- Variation of SCS combination type 1: SCS combination type 1 may follow at least one of the following several features.
   -- A case where an SSB SCS is larger than a PDCCH SCS (X1 > X2) may be supported or may not be supported.
   -- A case where the SSB SCS is equal to the PDCCH SCS (X1 = X2) may be supported or may not be supported.
   -- A case where the SSB SCS is smaller than the PDCCH SCS (X1 < X2) may be supported or may not be supported.
- SCS combination type 2: the SSB SCS is larger than 960 kHz (X1 > 960). The SCS of the PDCCH is equal to or less than 960 kHz (X2 ≤ 960).
   -- Example of SCS combination type 2: {SSB, PDCCH} SCS may be {15 · 2^{µ}, 15} kHz, {15 · 2^{µ}, 30} kHz, {15 · 2^{µ}, 60} kHz, {15 · 2^{µ}, 120} kHz, {15 · 2^{µ}, 240} kHz, {15 · 2^{µ}, 480} kHz, {15 · 2^{µ}, 960} kHz. Here, µ may be µ = 7, 8, 9, 10, 11, 12, For example, a candidate for the combination of {SSB, PDCCH} SCS may be at least one of the following several combinations.
   --- {1920, 15} kHz, {1920, 30} kHz, {1920, 60} kHz, {1920, 120} kHz, {1920, 240} kHz, {1920, 480} kHz, {1920, 960} kHz
   --- {3840, 15} kHz, {3840, 30} kHz, {3840, 60} kHz, {3840, 120} kHz, {3840, 240} kHz, {3840, 480} kHz, {3840, 960} kHz
   --- {7680, 15} kHz, {7680, 30} kHz, {7680, 60} kHz, {7680, 120} kHz, {7680, 240} kHz, {7680, 480} kHz, {7680, 960} kHz
   --- {15360, 15} kHz, {15360, 30} kHz, {15360, 60} kHz, {15360, 120} kHz, {15360, 240} kHz, {15360, 480} kHz, {15360, 960} kHz
- SCS combination type 3: SSB SCS is less than or equal to 960 kHz (X1 ≦ 960). The SCS of the PDCCH is larger than 960 kHz (X2 > 960).
   -- Example of SCS combination type 2: {SSB, PDCCH} SCS may be {15, 15 · 2^{µ}} kHz, {30, 15 · 2^{µ}} kHz, {60, 15 · 2^{µ}} kHz, {, 120, 15 · 2^{µ}} kHz, {240, 15 · 2^{µ}} kHz, {480, 15 · 2^{µ}} kHz, {960, 15 · 2^{µ}} kHz. Here, µ may be µ = 7, 8, 9, 10, 11, 12, For example, the candidate for the combination of {SSB, PDCCH} SCS may be at least one of the following several combinations.
   --- {15, 1920} kHz, {30, 1920} kHz, {60, 1920} kHz, {120, 1920} kHz, {240, 1920} kHz, {480, 1920} kHz, {960, 1920} kHz
   --- {15, 3840} kHz, {30, 3840} kHz, {60, 3840} kHz, {120, 3840} kHz, {240, 3840} kHz, {480, 3840} kHz, {960, 3840} kHz
   --- {15, 7680} kHz, {30, 7680} kHz, {60, 7680} kHz, {120, 7680} kHz, {240, 7680} kHz, {480, 7680} kHz, {960, 7680} kHz
   --- {15, 15360} kHz, {30, 15360} kHz, {60, 15360} kHz, {120, 15360} kHz, {240, 15360} kHz, {480, 15360} kHz, {960, 15360} kHz

### <<Variations of Embodiment 3-2>>

At least one SCS combination type among the SCS combination types 1 to 3 may be supported or may not be supported. For example, the SCS combination type 1 may not be supported, and the SCS combination type 2/3 may be supported. For example, the SCS combination type 1 may be supported and the SCS combination type 2/3 may not be supported.

At least one of X1 and X2 may be a value represented by 15 · 2^{µ} or may not be a value represented by 15 · 2^{µ}.

### <<Embodiment 3-3>>

A multiplexing pattern between the SSB and CORESET #0 may be defined.

For the SCS combination type 1/2/3, at least one of a pattern in which the SSB and CORESET #0 are TDMed (multiplexing pattern 1), a pattern in which the SSB and CORESET #0 are FDMed (multiplexing pattern 3), and a pattern in which the SSB and CORESET #0 are TDMed and FDMed (multiplexing pattern 2) may be supported.

In multiplexing pattern 1, the frequency resource (bandwidth) of the SSB and the frequency resource (bandwidth) of the CORESET/PDSCH may be different from each other or the same, as in the above-described FIG. 1A. In multiplexing pattern 2, the frequency resource (bandwidth) of the SSB and the frequency resource (bandwidth) of the PDSCH may be the same as or different from each other, as in the above-described FIG. 1B. In multiplexing pattern 2, the time resource (the number of symbols) of the CORESET and the time resource (the number of symbols) of the PDSCH may be the same as or different from each other, as in the above-described FIG. 1B. In multiplexing pattern 3, the frequency resource (bandwidth) of the SSB and the frequency resource (bandwidth) of the PDSCH may be the same as or different from each other as in the above-described FIG. 1C. In multiplexing pattern 3, the time resources (the number of symbols) of the SSB and the PDSCH and the time resources (the number of symbols) of the CORESET may be the same as or different from each other, as in the above-described FIG. 1C.

### <<Variations of Embodiment 3-3>>

The multiplexing pattern may depend on at least one parameter of the SSB SCS, the PDCCH SCS, the SCS combination type, the relationship between the SSB SCS and the PDCCH SCS, and the specific condition. For different values of the parameter, the applicable multiplexing pattern may be different. For different values of the parameter, the supported multiplexing patterns may be different. This embodiment may follow at least one of the following examples.
- Example 1: The supported multiplexing pattern for SCS combination type 1 is pattern 1/3.
- Example 2: The supported multiplexing pattern for SCS combination type 2 is pattern 1/2.
- Example 3: The supported multiplexing pattern for SCS combination type 3 is pattern 1.

### <<Embodiment 3-4>>

A method for determining the PDCCH monitoring occasion of CORESET #0 (for the Type0-PDCCH CSS set) when at least one of the SSB SCS and the PDCCH SCS is larger than 960 kHz may be defined.

A monitoring slot of the CORESET #0 PDCCH may follow at least one of the following several procedures 1-x.

- Procedure 1-1: The UE monitors the PDCCH in the Type0-PDCCH CSS set over X slots. The X slots may be, for example, slot #n0, slot #(n0 + N), slot #(n0 + 2 * N), ..., slot #(n0 + (X-1) * N). The values of X and N may follow the followings.
   -- The value of X may be defined by a specification or indicated by a MIB. The value of X may be the same for a plurality of different values of at least one parameter of the SCS combination type, the multiplexing pattern, the SSB SCS, and the PDCCH SCS.
   -- The value of N may be defined by the specification or indicated by the MIB. The value of N may be the same for a plurality of different values of at least one parameter of the SCS combination type, the multiplexing pattern, the SSB SCS, and the PDCCH SCS.
- Procedure 1-2: The value of n0 may follow at least one of the following several choices.
   -- Choice a: The value of n0 is determined based on the CORESET #0 monitoring parameter indicated by the MIB.
   -- Choice b: The value of n0 is determined based on the slot of the corresponding SSB. - For example, n0 = n_SSB may be satisfied, n0 = n_SSB - n_offset may be satisfied, or n0 = n_SSB + n_offset may be satisfied. Here, n_SSB is a slot index of the received SSB, and n_offset may be defined by a specification or indicated by an MIB.
   -- Variation: Which of choices a and b is applied may be based on a multiplexing pattern. Different choices may be applied for different multiplexing patterns. For example, Choice a may be applied to multiplexing pattern 1, and Choice b may be applied to multiplexing pattern 3/2.

The length of the CORESET #0 PDCCH may follow the following procedure 2.

- Procedure 2: The number of symbols of the CORESET #0 PDCCH may be any one of 1, 2, 3, 4. The number of symbols of the CORESET #0 PDCCH may be defined by a specification or may be indicated by the MIB.
- Variation: The length of the CORESET #0 PDCCH may depend on at least one parameter of the multiplexing pattern, the SSB SCS, the PDCCH SCS, and the SCS combination. For different values of the parameter, different values of the length of the CORESET #0 PDCCH may be applied. For example, the length of the CORESET #0 PDCCH for multiplexing pattern 1 may be 1/2/3 symbols. For example, the length of the CORESET #0 PDCCH for multiplexing pattern 3 may be one symbol. For example, the length of the CORESET #0 PDCCH for the multiplexing pattern 2 may be one symbol.

The first symbol index of the CORESET #0 PDCCH monitoring occasion may follow the following procedure 3.

- Procedure 3: The first symbol index of the Type0-PDCCH monitoring occasion in the plurality of monitoring slots may be defined by a specification or indicated by a MIB. When the first symbol index is defined by a specification, the rule of the first symbol index may be based on the new oblu of the corresponding SSB. For example, the start/end symbol of the Type0-PDCCH monitoring occasion is aligned with the start or end symbol of the corresponding SSB. For example, the start or end symbol of the Type0-PDCCH monitoring occasion is X symbols before or X symbols after the start or end symbol of the corresponding SSB.

A frequency domain resource of CORESET #0 may follow the following procedure 4-x.

- Procedure 4-1: The number of RBs of CORESET #0 may be 4/8/12/16/24/48/96/192/384, or the like. The number of RBs of CORESET #0 may be defined by a specification or may be indicated by the MIB.
- Procedure 4-2: The RB offset of CORESET #0 may be 0/1/2/3/4/8/9, or the like. The RB offset of CORESET #0 may be defined by a specification or may be indicated by the MIB.
- Variation: The number of RBs of CORESET #0 may depend on at least one parameter of the multiplexing pattern, the SSB SCS, the PDCCH SCS, and the SCS combination. To different values of the parameter, different values of the number of RBs of CORESET #0 may be applied. For example, 24/48/96 may be applied to the number of RBs of CORESET #0 of multiplexing pattern 1. For example, 24/48 may be applied to the number of RBs of CORESET #0 of multiplexing pattern 3/2.

According to this embodiment, the UE can appropriately monitor CORESET #0.

### <Case of Mandatory Function>

At least one function in the above-described embodiments may be a mandatory function of the UE in a specific radio communication system (RAT). The UE may be configured/indicated with the function or may perform the function without reporting the UE capability related to the function (mandatory without capability signalling). The UE may be required to report UE capability for the feature (mandatory with capability signalling).

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

The specific condition may indicate at least one of the following:
- Specific FR.
- Specific band.
- Specific scenario.
- Specific SSB SCS.
- Specific PDCCH (CORESET #0) SCS.
- Specific SCS combination type.
- Specific SCS combination.
- Specific multiplexing pattern.

At least one of the above-described embodiments may be applied only to a UE that has reported a specific UE capability or that supports the specific UE capability.

The specific UE capability may indicate at least one of the following:
- Supporting specific processing/operation/control/information of at least one of the above embodiments.
- Supporting an SCS larger than 960 kHz for SSB.
- Supporting one/two SSBs in one slot for SSB with SCS larger than 960 kHz.
- Supporting a plurality of consecutive SSBs with the same SSB index for SSB using an SCS larger than 960 kHz.
- Supporting a plurality of SSBs with different SSB indices for SSB with SCS larger than 960 kHz. Supporting a plurality of consecutive SSBs having different SSB indices for SSB using an SCS larger than 960 kHz.
- Supporting the maximum number of SSB indices greater than 64 for SSB with SCS larger than 960 kHz.
- The maximum supported number of SSB indices for SSB with SCS larger than 960 kHz.
- Supporting the maximum number of SSBs greater than 64 transmitted within given time for SSB with SCS larger than 960 kHz.
- The maximum number of supported SSBs transmitted within a given time for SSB with an SCS larger than 960 kHz.
- Supporting a CORESET #0 PDCCH using SCS larger than 960 kHz.
- Supported {SSB, PDCCH} SCS combination.
- Supporting {SSB, PDCCH} SCS combination when an SSB SCS is larger than 960 kHz and a CORESET #0 PDCCH SCS is larger than 960 kHz.
- Supporting {SSB, PDCCH} SCS combination when an SSB SCS is larger than 960 kHz, and a CORESET #0 PDCCH SCS is larger than 960 kHz, and the SSB SCS is larger than or less than the CORESET #0 PDCCH SCS.
- Supporting {SSB, PDCCH} SCS combination when an SSB SCS is larger than 960 kHz, and a CORESET #0 PDCCH SCS is larger than 960 kHz, and the SSB SCS is equal to the CORESET #0 PDCCH SCS.
- Supporting {SSB, PDCCH} SCS combination when an SSB SCS is larger than 960 kHz and a CORESET #0 PDCCH SCS is equal to or less than 960 kHz.
- Supporting {SSB, PDCCH} SCS combination when an SSB SCS is equal to or less than 960 kHz and a CORESET #0 PDCCH SCS is larger than 960 kHz.
- Supporting an SSB and CORESET #0 to be TDMed (multiplexing pattern 1) when at least one of an SSB SCS and a CORESET #0 PDCCH SCS is larger than 960 kHz.
- Supporting an SSB and CORESET #0 to be FDMed (multiplexing pattern 3) when at least one of an SSB SCS and a CORESET #0 PDCCH SCS is larger than 960 kHz.
- Supporting an SSB and CORESET #0 to be TDMed and FDMed (multiplexing pattern 2) when at least one of an SSB SCS and a CORESET #0 PDCCH SCS is larger than 960 kHz.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

The specific UE capability may be defined as a mandatory function not involving UE capability signaling or may be defined as a mandatory function involving UE capability signaling. The specific UE capability may be defined as an optional (selectable) function not involving UE capability signaling, or may be defined as an optional function involving UE capability signaling.

At least one of the above-described embodiments may be applied when the UE is configured/activated/triggered with specific information related to the above-described embodiment (or performance of the operation of the above-described embodiment) by higher layer signaling/physical layer signaling. The specific information may indicate at least one of the following:
- Information indicating enabling/disabling of the operation of the above embodiments.
- RRC parameters for a specific release (for example, Rel. 18/19). The RRC parameter may have a name obtained by adding "r18"/"r19" to the name of the existing RRC parameter.

When the UE does not support at least one of the specific UE capabilities above or is not configured with the specific information, operation of Rel. 15/16/17 may be applied, for example.

### (Supplementary Note)

Regarding one embodiment of the present disclosure, the following supplementary notes of the invention will be given.

### {Supplementary Note 1}

A terminal including:
a control section that determines a first subcarrier spacing (SCS) of a plurality of first synchronization signal blocks, based on a specific condition; and
a receiving section that receives one synchronization signal block among the plurality of first synchronization signal blocks, wherein
the SCS is higher than 960 kHz.

### {Supplementary Note 2}

The terminal according to supplementary note 1, wherein a maximum number of synchronization signal block indices in one cell and a number of the plurality of first synchronization signal blocks transmitted within a specific time are greater than 64.

### {Supplementary Note 3}

The terminal according to supplementary note 1 or 2, wherein the plurality of first synchronization signal blocks are transmitted in a plurality of consecutive slots or in a plurality of slots with a gap.

### {Supplementary Note 4}

The terminal according to any one of supplementary notes 1 to 3, wherein one or more first symbols transmitting the plurality of first SS blocks are determined based on one or more second symbols in which a plurality of second synchronization signal blocks transmitted using a second SCS lower than the first SCS are allocated.

### (Supplementary Note)

Regarding one embodiment of the present disclosure, the following supplementary notes of the invention will be given.

### {Supplementary Note 1}

A terminal including:
a receiving section that receives a synchronization signal block with a first subcarrier spacing (SCS); and
a control section that determines a second SCS of a control resource set, based on a specific condition and the synchronization signal block, wherein
at least one of the first SCS and the second SCS is higher than 960 kHz.

### {Supplementary Note 2}

The terminal according to supplementary note 1, wherein the specific condition indicates a relationship between the first SCS and the second SCS.

### {Supplementary Note 3}

The terminal according to supplementary note 1 or 2, wherein the control section determines a multiplexing pattern between the synchronization signal block and the control resource set, based on the specific condition.

### {Supplementary Note 4}

The terminal according to any one of supplementary notes 1 to 3, wherein the control section determines a physical downlink control channel monitoring occasion in the control resource set, based on the specific condition.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

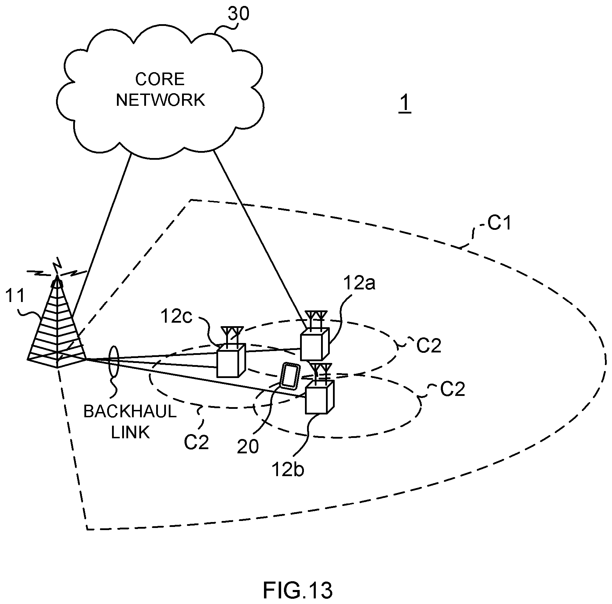

FIG. 13 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

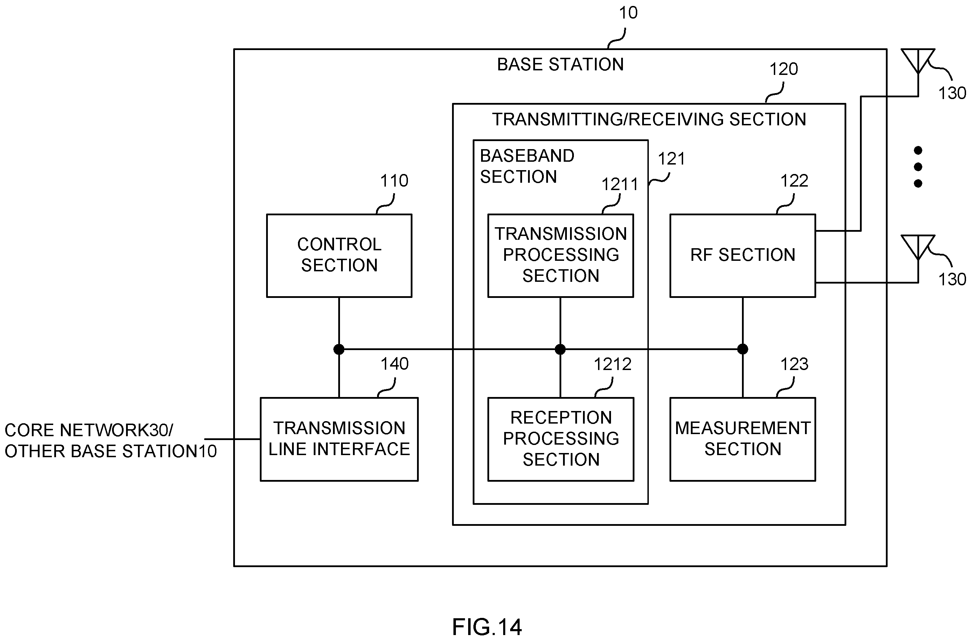

FIG. 14 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The control section 110 may determine a first subcarrier spacing (SCS) of a plurality of first synchronization signal blocks, based on a specific condition. The transmitting/receiving section 120 may transmit the plurality of first synchronization signal blocks. The SCS may be higher than 960 kHz.

The transmitting/receiving section 120 may transmit a synchronization signal block with a first subcarrier spacing (SCS). The control section 110 may determine a second SCS of a control resource set, based on a specific condition and the synchronization signal block. At least one of the first SCS and the second SCS may be higher than 960 kHz.

### (User Terminal)

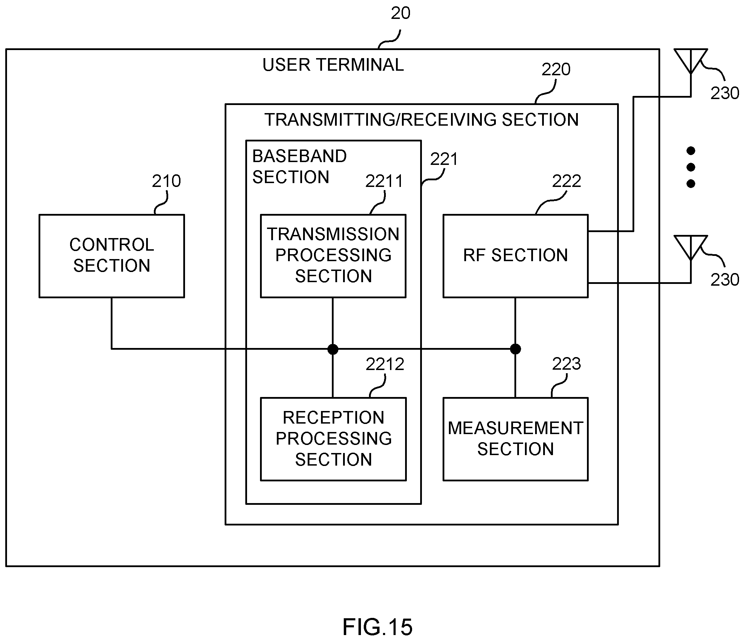

FIG. 15 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The control section 210 may determine a first subcarrier spacing (SCS) of a plurality of first synchronization signal blocks, based on a specific condition. The transmitting/receiving section 220 may receive one synchronization signal block among the plurality of first synchronization signal blocks. The SCS may be higher than 960 kHz.

A maximum number of synchronization signal block indices in one cell and a number of the plurality of first synchronization signal blocks transmitted within a specific time may be greater than 64.

The plurality of first synchronization signal blocks may be transmitted in a plurality of consecutive slots or in a plurality of slots with a gap.

One or more first symbols transmitting the plurality of first SS blocks may be determined based on one or more second symbols in which a plurality of second synchronization signal blocks transmitted using a second SCS lower than the first SCS are allocated.

The transmitting/receiving section 220 may receive a synchronization signal block with a first subcarrier spacing (SCS). The control section 210 may determine a second SCS of a control resource set, based on a specific condition and the synchronization signal block. At least one of the first SCS and the second SCS may be higher than 960 kHz.

The specific condition may indicate a relationship between the first SCS and the second SCS.

The control section 210 may determine a multiplexing pattern between the synchronization signal block and the control resource set, based on the specific condition.

The control section 210 may determine a physical downlink control channel monitoring occasion in the control resource set, based on the specific condition.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

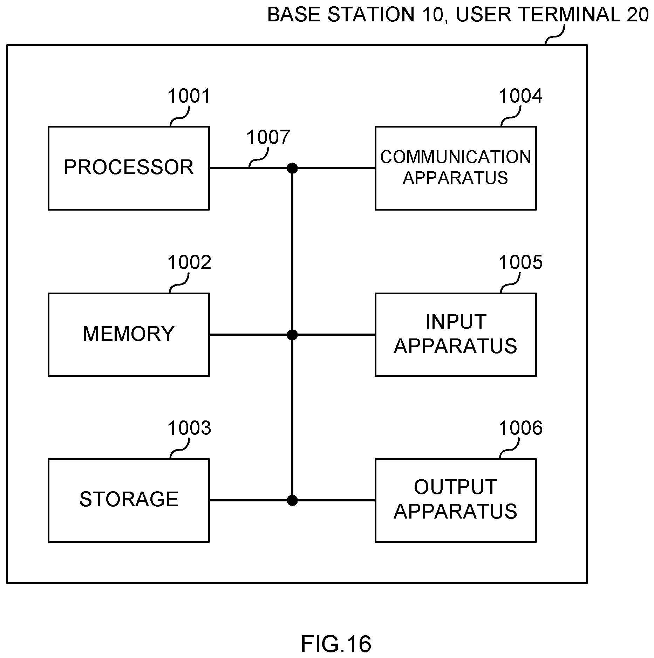

For example, a base station, a user terminal, and so on according to one embodiment of the present disclosure may function as a computer that executes the processes of the radio communication method of the present disclosure. FIG. 16 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

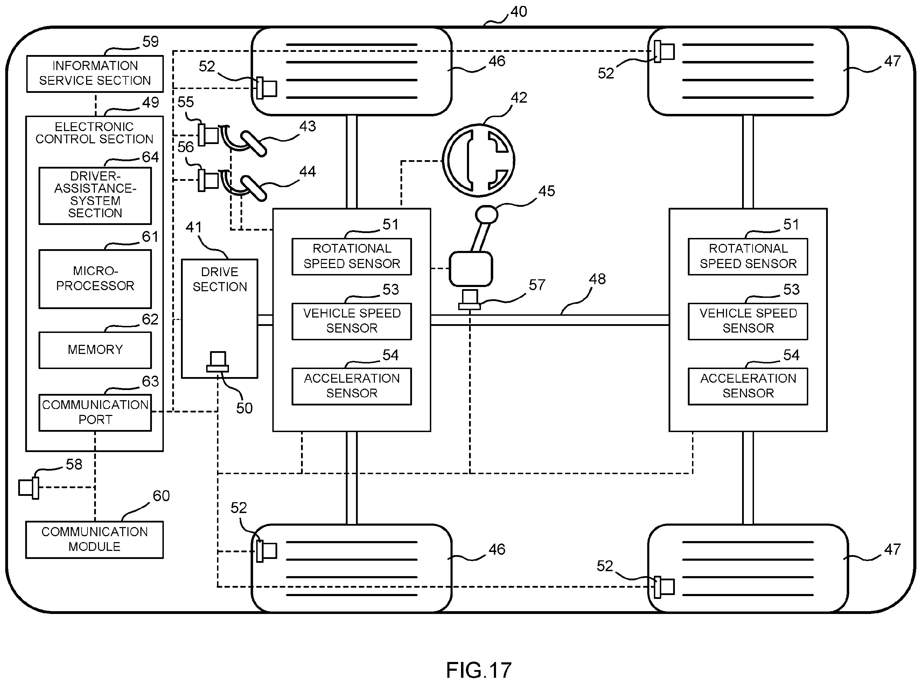

FIG. 17 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a control section that determines a first subcarrier spacing (SCS) of a plurality of first synchronization signal blocks, based on a specific condition; and
a receiving section that receives one synchronization signal block among the plurality of first synchronization signal blocks, wherein
the SCS is higher than 960 kHz.

2. The terminal according to claim 1, wherein
a maximum number of synchronization signal block indices in one cell and a number of the plurality of first synchronization signal blocks transmitted within a specific time are greater than 64.

3. The terminal according to claim 1, wherein
the plurality of first synchronization signal blocks are transmitted in a plurality of consecutive slots or in a plurality of slots with a gap.

4. The terminal according to claim 1, wherein
one or more first symbols transmitting the plurality of first SS blocks are determined based on one or more second symbols in which a plurality of second synchronization signal blocks transmitted using a second SCS lower than the first SCS are allocated.

5. A radio communication method for a terminal, the radio communication method comprising:
determining a first subcarrier spacing (SCS) of a plurality of first synchronization signal blocks, based on a specific condition; and
receiving one synchronization signal block among the plurality of first synchronization signal blocks, wherein
the SCS is higher than 960 kHz.

6. A base station comprising:
a control section that determines a first subcarrier spacing (SCS) of a plurality of first synchronization signal blocks, based on a specific condition; and
a transmitting section that transmits the plurality of first synchronization signal blocks, wherein
the SCS is higher than 960 kHz.
